(19) Europäisches Patentamt / European Patent Office / Office européen des brevets

(11) **EP 4 159 697 A1**

(12) **EUROPÄISCHE PATENTANMELDUNG**

(43) Veröffentlichungstag:
05.04.2023 Patentblatt 2023/14

(21) Anmeldenummer: 22207760.4

(22) Anmeldetag: 05.08.2020

(51) Internationale Patentklassifikation (IPC):
$C03C\ 21/00$ (2006.01)    $C03C\ 3/091$ (2006.01)

(52) Gemeinsame Patentklassifikation (CPC):
C03C 21/002; C03C 3/091

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 05.08.2019 DE 102019121147
05.08.2019 DE 102019121146
05.08.2019 DE 102019121144
05.08.2019 DE 102019121143

(62) Dokumentnummer(n) der früheren Anmeldung(en) nach Art. 76 EPÜ:
20753709.3 / 4 010 292

(71) Anmelder: SCHOTT AG
55122 Mainz (DE)

(72) Erfinder:
• BURGER, Inge
65185 Wiesbaden (DE)
• SEUTHE, Dr. Thomas
07747 Jena (DE)
• ALKEMPER, Dr. Jochen
55270 Klein-Winternheim (DE)
• KRÜGER, Dr. Susanne
55127 Mainz (DE)

• HOCHREIN, Dr. Oliver
55130 Mainz (DE)
• DIETRICH, Dr. Rüdiger
07745 Jena (DE)
• DJORDJEVIC-REISS, Dr. Jovana
55128 Mainz (DE)
• SCHMIADY, Thomas
07749 Jena (DE)
• HESSENKEMPER, Jörg
07749 Jena (DE)
• LEUKEL, Dr. Sebastian
55128 Mainz (DE)
• WEISSHUHN, Dr. Julia
55122 Mainz (DE)

(74) Vertreter: Blumbach · Zinngrebe Patentanwälte PartG mbB
Alexandrastraße 5
65187 Wiesbaden (DE)

Bemerkungen:
Diese Anmeldung ist am 16-11-2022 als Teilanmeldung zu der unter INID-Code 62 erwähnten Anmeldung eingereicht worden.

(54) **SCHEIBENFÖRMIGER, CHEMISCH VORGESPANNTER ODER CHEMISCH VORSPANNBARER GLASARTIKEL UND VERFAHREN ZU DESSEN HERSTELLUNG**

(57) Die Erfindung betrifft einen chemisch vorgespannten oder chemisch vorspannbaren, scheibenförmigen Glasartikel enthaltend ein Glas mit einer Zusammensetzung umfassend $Al_2O_3$, $SiO_2$, $Li_2O$ und $B_2O_3$, wobei das Glas und/oder der Glasartikel höchstens 7 Gew.-% $B_2O_3$, bevorzugt höchstens 5 Gew.-% $B_2O_3$, besonders bevorzugt höchstens 4,5 Gew.-% $B_2O_3$ umfasst.

Fig. 1

EP 4 159 697 A1

**Beschreibung**

Gebiet der Erfindung

Die Erfindung betrifft einen scheibenförmigen, chemisch vorgespannten oder zumindest chemisch vorspannbaren Glasartikel und ein Verfahren zu dessen Herstellung. Weiterhin betrifft die vorliegende Offenbarung auch eine Glaszusammensetzung.

Hintergrund der Erfindung

Scheibenförmige vorgespannte, insbesondere chemisch vorgespannte und besonders chemisch hoch vorgespannte Glasartikel finden insbesondere Verwendung als sogenannte Schutzgläser (oder Cover bzw. Covergläser) für mobile Endgeräte wie Smartphones oder Tablet-Computer. Im Vergleich mit Abdeckungen, die aus transparenten Kunststoffen bestehen, sind diese Schutzgläser insbesondere kratzfester, haben allerdings auch ein höheres Gewicht.

Nur chemisch vorgespannte scheibenförmige Glasartikel finden überhaupt Verwendung als Schutzgläser für mobile Endgeräte. Denn diese Glasartikel sind nochmals widerstandsfähiger gegenüber mechanischen Verschleißbelastungen, weisen also die für die Anwendung erforderliche Verschleißfestigkeit auf. Unter Verschleißfestigkeit wird im Rahmen der vorliegenden Offenbarung die Beständigkeit eines Erzeugnisses (oder Artikels, wie eines Glasartikels oder eines Glaserzeugnisses) gegenüber mechanischen Belastungen verstanden, insbesondere gegenüber abrasiven Belastungen, Kratzbelastungen oder Stoßbelastungen. Der Begriff der Verschleißfestigkeit oder kurz Festigkeit wird also im Rahmen der vorliegenden Offenbarung oberbegrifflich für die mechanische Beständigkeit eines Erzeugnisses bzw. Artikels verwendet. Spezielle Formen der Verschleißfestigkeit oder kurz Festigkeit sind beispielsweise die Kratzfestigkeit, die Biegefestigkeit, die Stoßfestigkeit oder vorzugsweise auch die Härte, wobei sich gezeigt hat, dass auch Verknüpfungen dieser Belastungen möglich und gerade in der praktischen Anwendung von besonderer Relevanz sind. Solche praktischen Belastungen sind beispielsweise der Aufprall auf eine raue Oberfläche, insbesondere im eingebauten Zustand.

Neben den Anforderungen an eine gute Verschleißfestigkeit sollte der scheibenförmige Glasartikel aber auch weitere Anforderungen erfüllen. Insbesondere sollte das Glas, welches der Glasartikel umfasst, gut herstellbar sein, also beispielsweise einem Schmelzprozess mit einem anschließenden Heißformgebungsverfahren zugänglich sein, wobei es vorzugsweise nicht zu Entglasung kommen sollte. Auch ist die chemische Beständigkeit des Glasartikels von Relevanz, insbesondere die Säurebeständigkeit. Dies ist insbesondere vor dem Hintergrund zu sehen, dass zwar eine gute Resistenz des Endproduktes notwendig ist, auf der anderen Seite aber auch eine gute Vorspannbarkeit in einem Ionenaustauschverfahren gegeben sein muss. Dabei hat sich gezeigt, dass eine gute Vorspannbarkeit in einem Ionenaustauschverfahren in der Regel eher mit einer geringen chemischen Beständigkeit korreliert, denn die für einen leichten Ionenaustausch vorteilhafte hohe Beweglichkeit insbesondere von Alkaliionen ist hinsichtlich der chemischen Beständigkeit eher abträglich.

Bekannte chemisch vorspannbare Gläser und/oder chemisch vorspannbare oder chemisch vorgespannte Glasartikel und/oder Verfahren zur Herstellung solcher Artikel sind beispielsweise beschrieben in der Patentfamilie zur US 2019/0016632 A1 mit einem bereits erteilten US-amerikanischen Patent US 9,593,42 B2 als Familienmitglied, der Patentfamilie zur US 2018/0057401 A1 mit einem bereits erteilten US-amerikanischen Patent US 10,294,151 B2 als Familienmitglied, der Patentfamilie zur US 2018/0029932 A1 mit einem bereits erteilten US-amerikanischen Patent US 10,259,746 B2 als Familienmitglied, der Patentfamilie zur US 2017/0166478 A1 mit einem bereits erteilten US-amerikanischen Patent US 9,908,811 B2 als Familienmitglied, der US 9,908,811 B2, der Patentfamilie zur US 2016/0122240 A1 mit einem bereits erteilten US-amerikanischen Patent US 10,239,784 B2 als Familienmitglied, der Patentfamilie zur US 2016/0122239 A1 mit einem bereits erteilten US-amerikanischen Patent US 10,150,698 B2 als Familienmitglied, der Patentfamilie zur US 2017/0295657 A1 mit einem bereits erteilten US-amerikanischen Patent US 10,271,442 B2 als Familienmitglied, der Patentfamilie zur US 2010/0028607 A1 mit einem bereits erteilten US-amerikanischen Patent US 8,312,739 B2 als Familienmitglied, der Patentfamilie zur US 2013/0224492 A1 mit einem bereits erteilten US-amerikanischen Patent US 9,359,251 B2 als Familienmitglied, der Patentfamilie zur US 2016/0023944 A1 mit einem bereits erteilten US-amerikanischen Patent US 9,718,727 B2 als Familienmitglied, der Patentfamilie zur US 2012/0052271 A1 mit einem bereits erteilten Familienmitglied US 10,227,253 B2, der Patentfamilie zur US 2015/0030840 A1 mit einem bereits erteilten US-amerikanischen Patent US 10,227,253 B2 als Familienmitglied, der Patentfamilie zur US 2014/0345325 A1, der Patentfamilie zur US 2016/0257605 A1 mit einem bereits erteilten US-Patent US 9,487,434 B2 als Familienmitglied, der Patentfamilie zur US 2015/0239776 A1 mit einem bereits erteilten US-Patent US 9,517,968 B2 als Familienmitglied, der Patentfamilie zur US 2015/0259244 A1 mit einem bereits erteilten US-amerikanischen Patent US 9,567,254 B2 als Familienmitglied, der Patentfamilie zur US 2017/0036952 A1 mit einem bereits erteilten US-amerikanischen Patent US 9,676,663 B2 als Familienmitglied, der Patentfamilie zur US 2018/0002223 A1 mit einem bereits erteilten US-amerikanischen Patent US 10,266,447 B2 als Familienmitglied, der Patentfamilie zur US 2017/0129803 A1 mit einem bereits erteilten US-amerikanischen Patent US 9,517,968 B2, der Patentfamilie zur US 2016/0102014 A1 mit einem bereits erteilten US-amerikanischen Patent US 10,266,447 B2 als Familienmitglied, der Patentfamilie zur US 2015/0368153 A1 mit einem bereits erteilten US-amerikanischen Patent US 9,676,663 B2 als Familienmitglied, der Patentfamilie zur US 2015/0368148 A1 mit einem bereits erteilten US-amerikanischen Patent US 9,902,648 B2 als Familienmitglied, der Patentfamilie zur US 2015/0239775 A1 mit einem bereits erteilten US-amerikanischen Patent US 10,118,858 B2, der Patentfamilie zur US 2016/0264452 A1 und dem bereits erteilten US-Patent US 9,902,648 B2, der Patentfamilie zur US 2016/ 102011 A1 und dem bereits erteilten US-Patent US 9,593,042 B2, der Patentfamilie zur WO 2012/126394 A1, der Patentfamilie zur US 2014/0308526 A1 und dem bereits erteilten US-amerikanischen Patent US 9,540,278 B2, der Patentfamilie zur US 2011/0294648 A1 und dem bereits erteilten US-amerikanischen Patent US 8,759,238 B2, der Patentfamilie zur US 2010/0035038 A1 und dem bereits erteilten US-amerikanischen Patent US 8,075,999 B2, der Patentfamilie zur US 4,055,703, der Patentfamilie zur DE 10 2010 009 584 A1, dem erteilten deutschen Patent DE 10 2010 009 584 B4 und der US-amerikanischen Anmeldung US 2016/0347655 A1 mit dem bereit erteilten US-amerikanischen Patent US10351471 B2, der Patentfamilie zur CN 102690059 A und dem bereits erteilten chinesischen Patent CN 102690059 B, der Patentfamilie zur US2016/0356760 A1 und dem bereits erteilten US-amerikanischen Patent US 10,180,416 B2, der Patentfamilie zur WO 2017/049028 A1 mit dem bereits erteilten US-amerikanischen Schutzrecht US 9,897,574 B2 als Familienmitglied, der Patentfamilie zur WO 2017/087742 A1, der Patentfamilie zur US 2017/0291849 A1 und dem bereits erteilten US-amerikanischen Patent US 10,017,417 B2, der Patentfamilie zur US 2017/0022093 A1 und dem bereits erteilten US-amerikanischen Patent US 9,701,569 B2, der Patentfamilie zur US 2017/300088 (A1) und dem erteilten US-amerikanischen Patent US 9,977,470 B2, der Patentfamilie zur EP 1 593 658 A1, der erteilten europäischen Patent EP 1 593 658 B1 sowie der US-amerikanischen Anmeldung US 2005/0250639 A1 und der Patentfamilie zur US 2018/0022638 A1 und dem bereits erteilten US-amerikanischen Patent US 10,183,887 B2. Dabei können chemisch vorspannbare Gläser unterschieden werden in sogenannte Aluminium-Silikatgläser (auch bezeichnet als AS-Gläser, Alumosilikatgläser oder Aluminosilikatgläser), welche als Komponenten insbesondere $Al_2O_3$ und $SiO_2$ sowie Alkalioxide außer Lithiumoxid $Li_2O$ umfassen, sowie Lithium-Aluminium-Silikatgläser (auch bezeichnet als LAS-Gläser, Lithium-Alumosilikatgläser oder Lithium-Aluminosilikatgläser), welche weiterhin noch $Li_2O$ als Komponente umfassen.

Weitere Dokumente des Standes der Technik finden sich in der Patentfamilie zur US 2019/0152838 A1, der Patentfamilie zur US 2013/0122284 A1 und dem bereits erteilten US-amerikanischen Patent US 9,156,724 B2, der Patentfamilie zur US 2015/0079400 A1 mit dem bereits erteilten US-Schutzrecht US 9,714,188 B2, der Patentfamilie zur US 2015/0099124 A1 und dem bereits erteilten US-amerikanischen Patent US 9,701,574 B2, der Patentfamilie zur WO 2019/085422 A1, der Patentfamilie zur US 2017/0197869 A1 und dem bereits erteilten US-amerikanischen Patent US 10,131,567 B2, der Patentfamilie zur US 2015/0030840 A1 und dem bereits erteilten US-amerikanischen Schutzrecht US 10,227,253 B2, der Patentfamilie zur US 2015/0140325 A1 und dem bereits erteilten US-amerikanischen Schutzrecht US 10,125,044 B2, der Patentfamilie zur US 2015/0118497 A1 und dem bereits erteilten US-amerikanischen Schutzrecht US 9,822,032 B2, der Schutzrechtsfamilie zur US 2012/0135852 A1 und dem bereits erteilten US-amerikanischen Schutzrecht US 8,796,165 B2, der Schutzrechtsfamilie zur US 2015/0147575 A1 und dem bereits erteilten US-amerikanischen Patent US 10,000,410 B2 sowie in der Schutzrechtsfamilie zur US 2015/0376050 A1 und dem bereits erteilten US-amerikanischen Patent US 9,783,451 B2.

Diese Gläser sind so ausgestaltet, dass sie chemisch vorspannbar sind. Unter einem Glas, welches chemisch vorspannbar ist, wird im Rahmen der vorliegenden Offenbarung ein Glas verstanden, welches einem Ionenaustauschprozess zugänglich ist. In einem solchen Prozess werden in einer Oberflächenschicht eines Glasartikels, wie beispielsweise einer Glasscheibe, Ionen von Alkalimetallen ausgetauscht. Dies erfolgt derart, dass in der Oberflächenschicht nunmehr eine Druckspannungszone aufgebaut wird, was durch den Austausch von Ionen mit kleineren Radien durch Ionen mit größeren Radien erzielt wird. Dazu wird der Glasartikel in ein sogenanntes Ionenaustauschbad, beispielsweise eine Salzschmelze, eingetaucht, wobei das Ionenaustauschbad die Ionen mit den größeren Ionenradien umfasst, insbesondere Kalium- und/oder Natriumionen, sodass diese in die Oberflächenschicht des Glasartikels migrieren. Im Austausch dafür wandern Ionen mit geringeren Ionenradien, insbesondere Natrium- und/oder Lithiumionen, aus der Oberflächenschicht des Glasartikels in das Ionenaustauschbad.

Dadurch bildet sich eine Druckspannungszone aus. Diese kann durch die kennzeichnenden Größen der Druckspannung, welche auch als "compressive stress" oder abgekürzt "CS" bezeichnet wird, und die Druckspannungstiefe, die auch als "Depth of Layer" oder abgekürzt "DoL" bezeichnet wird, beschrieben werden. Diese Druckspannungstiefe DoL ist dem Fachmann hinlänglich bekannt und bezeichnet im Rahmen der vorliegenden Offenbarung diejenige Tiefe, bei der die Spannungskurve den Spannungsnulldurchgang hat. Bei Gläsern des LAS-Typs und des LABS-Typs, welche einem gemischten Tauschverfahren zugänglich sind, wird zwischen zwei unterschiedlichen Schichttiefen unterschieden, der Kalium-DoL, die die Tiefe der Kaliuminduzierten Druckspannung beschreibt, und der Natrium-DoL, die teilweise auch als DoCL abgekürzt wird. Diese Natrium-DoL beschreibt die Tiefe der Natrium-induzierten Druckspannung. Alternativ oder zusätzlich kann diese Dicke DoL mittels eines spannungsoptischen Nulldurchgangsmessverfahrens, beispielsweise mittels eines Messgerätes mit der Handelsbezeichnung FSM-6000 oder SLP 1000, bestimmt werden. Diese Messverfahren basieren auf unterschiedlichen physikalischen Verfahren. Das Messgerät FSM misst die Kalium-Werte (K-DoL und CS(0)), SLP misst die Natrium-Parameter CS(30) und DoCL.

Mittels des Messgeräts FSM-6000 kann für Alumosilikatgläser ebenfalls die Druckspannung der Oberfläche sowie die maximale Druckspannung CS einer Scheibe oder eines scheibenförmigen Glasartikels ermittelt werden.

Im Rahmen der vorliegenden Offenbarung werden die Begriffe der Verschleißfestigkeit und der Festigkeit, sofern nicht ausdrücklich anders erwähnt, weitgehend synonym als Oberbegriff für die Beständigkeit eines Materials bzw. eines Erzeugnisses gegenüber mechanischen Angriffen verwendet. Im Rahmen der vorliegenden Offenbarung werden spezielle Festigkeiten, beispielsweise die Set-Drop-Festigkeit oder die Biegefestigkeit (auch: Biegezugfestigkeit), als Unterfälle der (Gesamt-)Festigkeit eines Materials bzw. Erzeugnisses oder Artikels verstanden. Ebenfalls oberbegrifflich unter dem Begriff der Verschleißfestigkeit wird im Rahmen der vorliegenden Offenbarung die Härte eines Materials subsumiert. Die Härte wird im Rahmen der vorliegenden Offenbarung verstanden als der mechanische Widerstand, welcher ein Material oder ein Erzeugnis, beispielsweise ein scheibenförmiger Glasartikel, dem Eindringen eines anderen Gegenstandes entgegensetzt. Der ermittelte Härtewert eines Materials bzw. eines Erzeugnisses ist dabei unter anderem auch abhängig von der genauen Art der durchgeführten Härteprüfung. Bekannte Härten sind beispielsweise die Mohs-Härte oder die Vickers-Härte, wobei die Mohs-Härte eine nicht mehr übliche Methode der Härtebestimmung ist. Vielmehr wird häufig auch die Knoop-Härte angegeben. Mohs-Härte und Knoop-Härte sind dabei allerdings ungünstige Härtebestimmungsverfahren für Gläser und Glaskeramiken, da sie nicht geeignet sind, Mikroelastizität, insbesondere hohe Mikroelastizität, von untersuchten Materialien zu berücksichtigen, denn bei diesen Verfahren wird mit einer visuellen Betrachtung des Eindrucks nach dem Eindrücken gearbeitet und anhand dessen die Härte bestimmt. Die sogenannte Martens-Härte wird dagegen mathematisch anhand der Eindrückkurve ermittelt. Im Rahmen der vorliegenden Offenbarung wird unter der Härte insbesondere auch die sogenannte Martens-Härte verstanden.

Es hat sich gezeigt, dass die realen Belastungen, denen ein scheibenförmiger Glasartikel ausgesetzt ist, nur unzureichend durch eine isolierte Betrachtung von Abrieb, Kratz- und/oder Stoßbelastungen beschrieben und simuliert werden können. So treten unter realen Bedingungen tatsächlich Belastungen auf, in welchen beispielsweise ein Abrieb an einer Oberfläche mit spitzen Partikeln erfolgen kann, und beispielsweise ist auch die Stoßbelastung, welche beim Fallen eines Prüfkörpers auf einen scheibenförmigen Glasartikel zur Bestimmung einer Stoßfestigkeit erfolgt, nur teilweise, falls überhaupt, vergleichbar mit der Belastung, die auftritt, wenn ein verbauter scheibenförmiger Glasartikel auf eine Oberfläche fällt.

Allgemein hat sich gezeigt, dass die Härte bei der Verwendung von Gläsern bzw. Glasartikeln als Cover (oder Abdeckscheibe) für die Mobilelektronik eine wichtige Rolle spielt. In der Regel gilt, dass die Kratzfestigkeit umso höher ist, je höher die Härte des Glases bzw. des Glasartikels ist.

Allgemein gibt es zwei Ansätze, die Oberflächenhärte von Covern, also Abdeckscheiben, zur Vermeidung von Verkratzung zu erhöhen:

- Zum einen können sehr harte, durchsichtige Materialien verwendet werden. Beispielsweise ist der Einsatz von sogenannten "Saphirgläsern" (Einkristallen aus Korund) bekannt. Diese werden beispielsweise als Lünetten für Uhren verwendet. Solche Materialien verkratzen nur sehr gering, weisen also nur eine geringe Verkratzungsneigung auf. Allerdings sind diese Materialien nur sehr aufwändig zu verarbeiten und sehr spröde. Dies bedeutet allerdings auch, dass bereits bei sehr geringen Oberflächenbeschädigungen Bruch auftreten kann. Mit anderen Worten sind diese sehr harten Materialien zwar kratzfest, so dass erst bei großen Belastungen eine Verkratzung auftritt diese kann dann allerdings auch sehr schnell zu Materialversagen durch Bruch führen.

- Eine andere Möglichkeit, die Kratzfestigkeit einer Abdeckscheibe zu erhöhen, besteht darin, Schichten aus einem Hartstoff auf die Abdeckscheibe aufzubringen. In der Regel sind solche Beschichtungen weniger als 2 $\mu$m dick, um die optische Auffälligkeit möglichst gering zu halten, und werden mittels üblicher Beschichtungsverfahren, beispielsweise Sputtern, aufgebracht. Der Vorteil eines solchen Vorgehens ist, dass auf diese Weise eine Abdeckscheibe bestehend aus Glas oder umfassend Glas, beispielsweise ein scheibenförmiger Glasartikel, verwendet werden kann. Mit anderen Worten kann also auf diese Weise ein Material für die Abdeckscheibe verwendet werden, welches gut verarbeitbar ist, und wobei dessen im Vergleich mit Hartstoffmaterialien eher geringe Kratzfestigkeit durch eine Beschichtung verbessert werden kann.

Nachteilig hieran ist allerdings wiederum, dass ein aufwändiger Beschichtungsschritt notwendig ist. Auch sind Beschichtungsverfahren, welche üblicherweise für das Aufbringen von Hartstoffschichten eingesetzt werden, nicht für die Beschichtung von dreidimensional verformten Substraten geeignet. Auch das Aufbringen der Beschichtung an Ecken und Kanten des zu beschichtenden scheibenförmigen Glasartikels ist auf diese Weise nicht möglich. Weiterhin ist der Härtegradient zwischen dem scheibenförmigen Glasartikel und der Beschichtung sehr steil. An der Grenzfläche zwischen diesen beiden Materialien kommt es damit oft zu Ablösungen, insbesondere bei thermischer oder mechanischer Belastung.

Es hat sich nun gezeigt, dass für die Kratzanfälligkeit auch das plastische bzw. elastische Verhalten eines Materials, beispielsweise eines Glases, eine große Rolle spielt. Denn durch das Kratzen werden temporäre Spannungen in das Material eingebracht, die durch elastisches Verhalten aufgefangen und nach Entlastung schädigungsfrei relaxieren können. Führen die eingebrachten temporären Spannungen jedoch zu einer plastischen Verformung des Materials, werden aus temporären Spannungen permanente Spannungen, die zu einer Verringerung der Festigkeit führen können, im schlimmsten Fall zum Bruch bei Entlastung.

Es besteht damit ein Bedarf an verbesserten scheibenförmigen Glasartikeln zur Verwendung als Abdeckscheibe, welche ausreichend kratzfest sind, gleichzeitig jedoch eine geringe Sprödigkeit aufweisen.

Aufgabe der Erfindung

Die Aufgabe der Erfindung besteht daher in der Bereitstellung eines scheibenförmigen Glasartikels, insbesondere eines Glasartikels, welcher zur Verwendung als Abdeckscheibe geeignet ist, welcher die Probleme des Standes der Technik zumindest teilweise mildert. Weitere Aspekte betreffen die Verwendung eines solchen Glasartikels, eine Glaszusammensetzung sowie ein Verfahren zu seiner Herstellung.

Zusammenfassung der Erfindung

Die Aufgabe wird gelöst durch den Gegenstand der unabhängigen Ansprüche. Bevorzugte und spezielle Ausführungsformen sind Gegenstand der abhängigen Ansprüche, der Beschreibung und der Zeichnungen.

Die vorliegende Offenbarung betrifft damit nach einem ersten Aspekt einen chemisch vorgespannten oder zumindest chemisch vorspannbaren, scheibenförmigen Glasartikel. Dieser umfasst ein Glas mit einer Zusammensetzung umfassend $Al_2O_3$, $SiO_2$, $Li_2O$ und $B_2O_3$, wobei das Glas und/oder der Glasartikel höchstens 7 Gew.-% $B_2O_3$, bevorzugt höchstens 5 Gew.-% $B_2O_3$, besonders bevorzugt höchstens 4,5 Gew.-% $B_2O_3$ umfasst. Mit anderen Worten ist das Glas bzw. ist der Glasartikel als Lithium-Aluminium-Borsilikatglas (LABS-Glas) bzw. Lithium-Aluminium-Borsilikatglasartikel, wobei der Gehalt an $B_2O_3$ im Glas und/oder Glasartikelallerdings begrenzt ist.

Eine solche Ausgestaltung eines Glasartikels ist vorteilhaft. Denn es hat sich gezeigt, dass mit bzw. aus einem solchen LABS-Glas auf überraschend einfache Weise ein Glasartikel erhalten werden kann, welcher eine hohe Oberflächenhärte vorteilhafterweise mit einer hohen Vorspannung kombinieren kann und gleichzeitig eine gute mechanische Beständigkeit gegenüber gebrauchsrelevanten Belastungen, beispielsweise einem sogenannten "sharp impact", erzielt werden kann.

Dies ist umso überraschender, als bislang zwar bekannt war, dass ein gewisser Gehalt an $B_2O_3$ zwar geeignet sein kann, die Kratzfestigkeit eines Glases bzw. eines Glasartikels zu erhöhen, sich allerdings auch gezeigt hatte, dass dieser Effekt begrenzt ist.

Überraschenderweise hat sich allerdings gezeigt, dass weniger die Erhöhung der Kratzfestigkeit zu einer Verbesserung der Gebrauchseigenschaften eines Glasartikels, beispielsweise für die Anwendung als Abdeckscheibe (oder Cover), führt. Vielmehr hat sich gezeigt, dass es bei LABS-Gläsern zu einer höchst vorteilhaften Verbesserung der mechanischen Eigenschaften, insbesondere der elastischen Eigenschaften, des Glases bzw. des Glasartikels kommen kann, insbesondere auch im vorgespannten Zustand. Der Grund hierfür ist nicht vollständig verstanden, die Erfinder gehen jedoch davon aus, dass diese höchst vorteilhaften Eigenschaften des Glases bzw. des Glasartikels ursächlich durch den Gehalt an $B_2O_3$ in einem Lithium-Aluminium-Silikatglas liegt.

Dafür kann es bevorzugt sein, dass das Glas bzw. der Glasartikel einen gewissen Mindestgehalt an $B_2O_3$ aufweist. Gemäß einer Ausführungsform umfasst das Glas und/oder der Glasartikel daher wenigstens 0,5 Gew.-% $B_2O_3$, bevorzugt wenigstens 1,0 Gew.-% $B_2O_3$, besonders bevorzugt wenigstens 1,4 Gew.-% $B_2O_3$.

Gemäß einem weiteren Aspekt betrifft die vorliegende Offenbarung einen scheibenförmigen Glasartikel, insbesondere einen scheibenförmigen Glasartikel wie vorstehend beschrieben, welcher wenigstens eines der folgenden Merkmale aufweist:

- Der Glasartikel weist in einem Verfahren zur Härteprüfung in Anlehnung an oder gemäß DIN EN ISO 14577 bei Indentierung mit einem Vickers- Indenter einen E*-Modul (auch als Plattenmodul bezeichnet) von höchstens 87 GPa bei einer Indentierungstiefe von 1 μm und/oder einen E*-Modul von höchstens 80 GPa bei einer Indentierungstiefe von 2 μm und/oder einen E*-Modul von höchstens 78 GPa bei einer Indentierungstiefe von 3 μm auf, wobei die Untergrenze für den E*-Modul bevorzugt jeweils bei mindestens 72 GPa liegt.

- Der Glasartikel weist in einem Verfahren zur Härteprüfung in Anlehnung an oder gemäß DIN EN ISO 14577 bei Indentierung mit einem Vickers-Indenter einen elastischen Anteil der Verformung von wenigstens 58 % bei einer Indentierungstiefe von 1 μm auf.

Bei dem E*-Modul handelt es sich um den Plattenmodul. Dieser ist definiert als

$$E^* = \frac{E_{IT}}{1 - v_s^2}$$

Mit: $E_{IT}$ Eindringmodul und $v_s$ Poissonkonstante der Probe.

Ferner gelten für den E*-Modul sowie den Eindringmodul $E_{IT}$ die nachfolgenden Definitionen der Norm DIN EN ISO 14577-1

$$E* = \frac{1}{\frac{1}{E_{r,n}} - \frac{1 - (v_i^2)}{E_i}} = \frac{E_{IT}}{1 - (v_s^2)} \tag{A.15}$$

$$E_{IT} = \frac{1 - (v_s)^2}{\frac{1}{E_{r,n}} - \frac{1 - (v_i)^2}{E_i}} \tag{A.16}$$

Dabei ist

$v_s$ die Poissonzahl der Probe;

$v_i$ die Poissonzahl des Eindringkörpers (bei Diamant 0,07) (z. B. in Literaturhinweis [6]);

$E_r$ der reduzierte Modul bei Eindringkontakt;

$E_i$ der Modul des Eindringkörpers (bei Diamant 1 140 GPa) (z. B. in Literaturhinweis [6]);

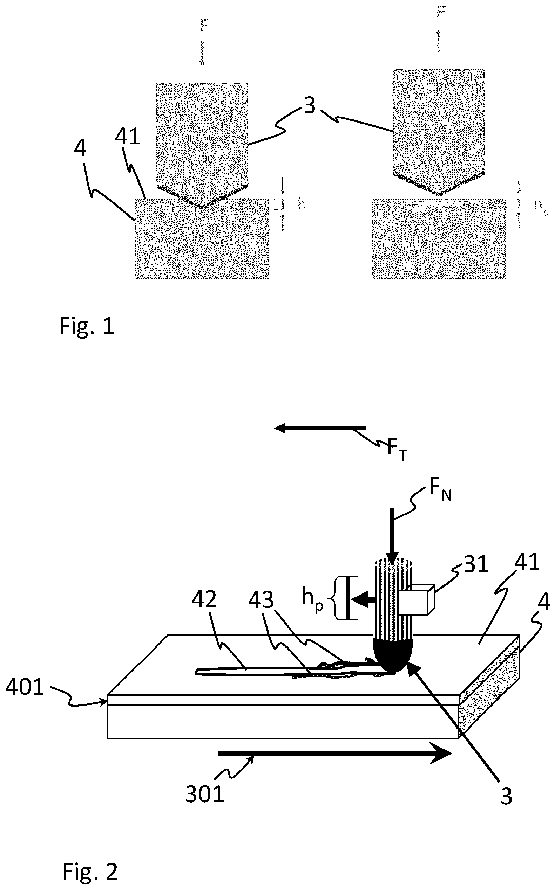

Eine Prinzipskizze einer Indentierung zeigt Fig. 1. Hierbei wirkt eine Kraft F auf einen Eindringkörper oder Indenter 3. Die Kraft wirkt dabei in Normalenrichtung zur Oberfläche 41 eines Prüfkörpers oder einer Probe 4, deren Härte bestimmt werden soll, und wird daher auch als Normalkraft bezeichnet. Die Eindringtiefe oder auch Penetrationstiefe wird senkrecht zur Oberfläche 41 bestimmt, und ist in Fig. 1 mit h bzw. $h_p$ bezeichnet.

Bei der Härteprüfung in Anlehnung an oder gemäß DIN EN ISO 14577 handelt es sich um die Bestimmung der sogenannten Martens-Härte. Diese Härtebestimmung wird für die im Rahmen der vorliegenden Offenbarung betrachteten Glasartikel wie folgt durchgeführt:

Die Indentierung erfolgt mit einem Vickers-Indenter bei einer Normalkraft zwischen 0,1 N und 5 N unter Verwendung des Testgeräts Micro-Combi-Test (MCT) der Firma csm. Indentiert wird bei einer relativen Raumfeuchte zwischen 30% und 50%. Eindrücken und Auswerten erfolgen nach DIN EN ISO 14577, wobei hierbei beachtlich ist, dass sich die DIN EN ISO 14577 auf Metalle bezieht und eine entsprechende Norm zur Prüfung von Sprödmaterialien nicht vorliegt. Insofern erfolgt die Bestimmung der Martens-Härte analog bzw. in Anlehnung an das in DIN EN ISO 14577 beschriebene Testverfahren für Metalle bzw. duktile Materialien. Für die Bestimmung der Kenngrößen HM (Martenshärte), E* (Plattenmodul) und η (elastischer Anteil) wurden pro Kraftstufe jeweils zehn Eindrücke gesetzt und die Mittelwerte berechnet.

Bei einem Vickers-Indenter handelt es sich um eine gleichseitige Diamantpyramide mit einem Öffnungswinkel, bestimmt zwischen den Seitenflächen der Pyramide, von 136°. Der Eindringkörper ist beispielsweise auch beschrieben in der DIN EN ISO 6507-2.

Eine solche Ausgestaltung eines Glasartikels ist sehr vorteilhaft, weil damit auf sehr überraschende Weise eine besonders gute Kratzfestigkeit bei gleichzeitig guter Beständigkeit des Glasartikels bei sogenannten sharp-impact-Belastungen (beispielsweise in einem sogenannten Set-Drop-Test) erzielt werden kann.

Der Set-Drop-Test, der einen realen Anwendungsfall simulieren soll, wird dabei vorzugsweise wie folgt durchgeführt:

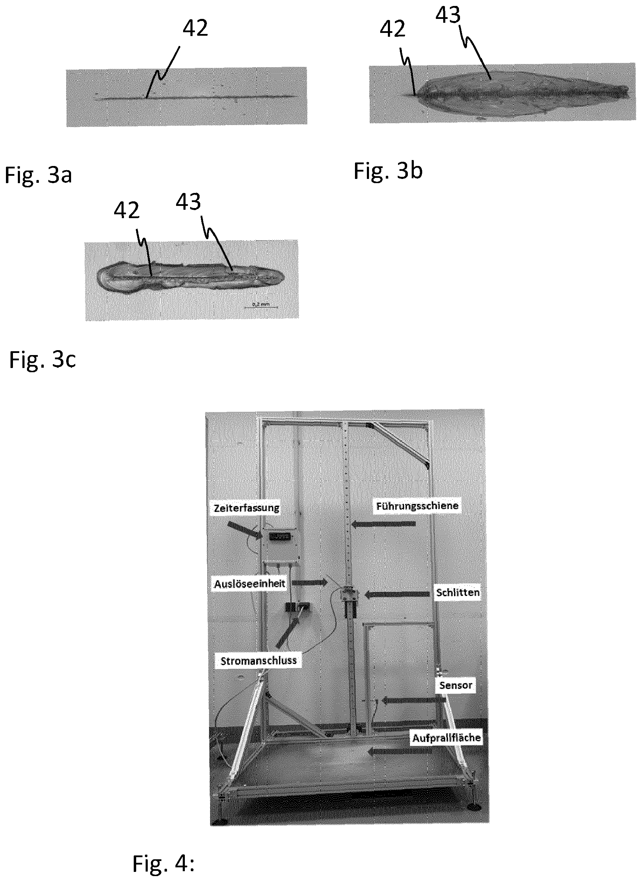

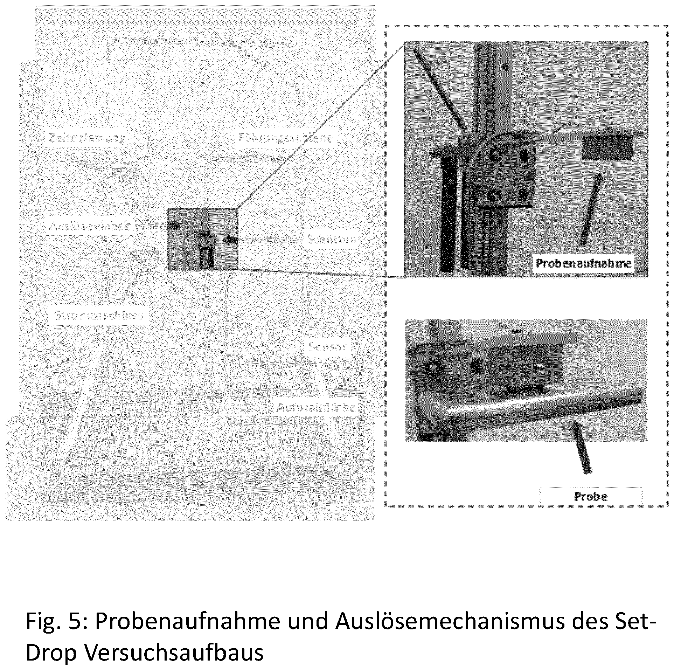

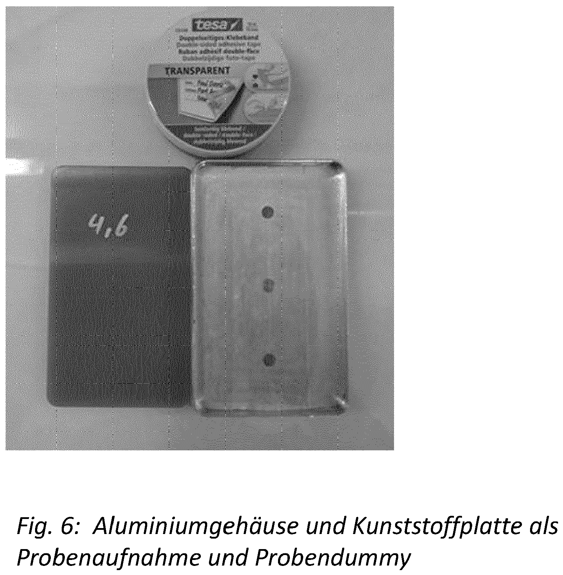

Eine Glasscheibe wird auf einer Probenaufnahme fixiert und aus kumulierenden Fallhöhen auf einen definierten Untergrund fallen gelassen. Eine Übersicht des Gesamtaufbaus ist in Fig. 4 dargestellt. Der im Set-Drop-Test verwendete Glasartikel weist eine Länge von 99 mm und eine Breite von 59 mm auf und wird wie in Fig. 5 dargestellt magnetisch mit einem Probendummy in der Probenaufnahme fixiert. Zunächst wird dabei eine Kunststoffplatte mit Hilfe eines doppelseitigen Klebebandes in ein Metallgehäuse, welches Form und Gewicht einer Halterung für ein mobiles Endgerät, beispielsweise ein Smartphone, hat, geklebt. Es eignen sich hierbei beispielsweise Kunststoffplatten mit Dicken zwischen 4,35 mm und bis 4,6 mm (siehe Fig. 6). Das Einkleben erfolgt bevorzugt mittels eines doppelseitigen Klebebandes mit einer Dicke von etwa 100 $\mu$m. Auf die Kunststoffplatte wird dann mittels eines doppelseitigen Klebebandes, vorzugsweise eines doppelseitigen Klebebandes mit der Dicke 295 $\mu$m, insbesondere ein doppelseitiges Klebeband der Marke tesa®, Produktnummer 05338, der zu testende scheibenförmige Glasartikel so aufgeklebt, dass zwischen der Oberkante des Gehäuses bzw. der Halterung und der Oberkante des Glasartikels ein Abstand zwischen 350 $\mu$m und 450 $\mu$m erhalten

wird. Der Glasartikel liegt höher als der Rahmen des Gehäuses und es darf kein direkter Kontakt zwischen Glaskörper und Aluminiumgehäuse auftreten. Das so erhaltene "Set" mit einem Gewicht von 177,5 g, welches den Einbau eines Glasartikels in ein mobiles Endgerät nachempfindet und eine Art "Dummy" für ein echtes mobiles Endgerät, hier insbesondere ein Smartphone, ist, wird anschließend auf eine Fläche der Größe DIN A4, die sogenannte Aufprallfläche, mit der Glasseite nach unten mit einer Anfangsgeschwindigkeit in vertikaler Richtung, somit Fallrichtung von Null, fallen gelassen. Die Aufprallfläche wird dabei wie folgt hergestellt: Sandpapier mit einer entsprechenden Körnung, beispielsweise der Körnung 60 (#60), wird mittels eines doppelseitigen Klebebandes, beispielsweise eines Klebebandes der Dicke 100 $\mu$m auf eine Bodenplatte geklebt. Als Klebeband wurde tesa® (10m/15mm), transparent, doppelseitig, Produktnummer 05338, genutzt. Die Körnung ist im Rahmen der vorliegenden Offenbarung definiert gemäß den Normen der Federation of European Producers of Abrasives (FEPA), Beispiele dafür siehe auch in DIN ISO 6344, insbesondere DIN ISO 6344-2:2000-04, Schleifmittel auf Unterlagen - Korngrößenanalyse - Teil 2: Bestimmung der Korngrößenverteilung der Makrokörnungen P 12 bis P 220 (ISO 6344-2:1998).

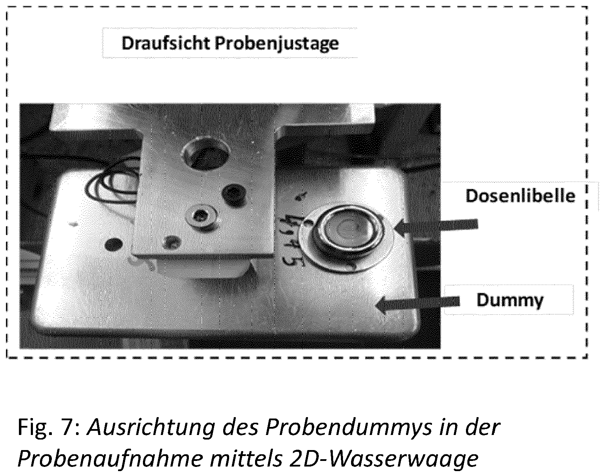

Die Bodenplatte muss fest sein und ist bevorzugt aus Aluminium oder alternativ auch aus Stahl ausgebildet, kann aber auch als Steinplatte ausgebildet sein und beispielsweise Granit oder Marmor umfassen. Das Gewicht der Bodenplatte, die bei den vorliegend offenbarten Angaben eine Aluminiumunterlage ist, beläuft sich auf ca. 3 kg. Das Sandpapier muss komplett mit Klebeband versehen und blasenfrei aufgeklebt sein. Die Aufprallfläche darf lediglich für zehn Fallversuche verwendet werden und ist nach dem zehnten Fallversuch auszutauschen. Die Probe, also das erhaltene Set, wird in die Prüfvorrichtung eingesetzt und mittels einer 2D-Wasserwaage (Dosenlibelle) so ausgerichtet, dass das Set horizontal gelagert ist, wobei der scheibenförmige Glasartikel zum Boden, also in Richtung der Aufprallfläche, zeigt (siehe Fig. 7). Die erste Fallhöhe ist 25 cm, danach erfolgt der Fall aus einer Höhe von 30 cm. Sofern noch immer kein Bruch auftritt, wird nun die Fallhöhe in 10-cm-Schritten erhöht, bis Glasbruch eintritt. Die Bruchhöhe, der Bruchursprung sowie das Brucherscheinungsbild werden notiert. Der Test wird an 15 Proben durchgeführt, und es wird ein Mittelwert gebildet.

Es kann vorteilhaft sein, den scheibenförmigen Glasartikel so auf der Kunststoffplatte zu befestigen, dass der scheibenförmige Glasartikel im Falle eines Glasbruchs auf einer Folie haften bleibt, um zum einen möglichst problemlos entfernt zu werden, zum anderen aber auch, um eine Untersuchung des Glasartikels zu ermöglichen. Dazu kann es empfehlenswert sein, zusätzlich zu den verwendeten Klebebändern eine selbstklebende Folie, beispielsweise eine Folie, wie sie für das Einschlagen von Büchern verwendet wird, zwischen der Kunststoffplatte und dem scheibenförmigen Glasartikel anzuordnen. Mittels dieser Folie kann dann der gebrochene scheibenförmige Glasartikel entfernt werden.

Wie vorstehend zum Stand der Technik ausgeführt, hatte sich bislang gezeigt, dass gemeinhin als sehr "hart" bezeichnete Stoffe, wie beispielsweise $Al_2O_3$ (was auch als "Saphir" oder Saphirglas" bezeichnet wird), zwar eine hohe Kratzfestigkeit aufweisen, aber gleichzeitig sehr spröde sind, sodass sie bei einem realen Belastungsfall, wie beispielsweise dem sogenannten Set-Drop-Test, schnell durch Bruch versagen.

Mittels einer Ausgestaltung des Glasartikels nach Ausführungsformen kann nun überraschenderweise ein kratzfester Glasartikel erreicht werden, welcher gleichzeitig auch eine gute Performance in einem Test, der einen realen Belastungsfall simuliert, wie beispielsweise dem vorstehend genannten Set-Drop-Test, aufweist.

Die Kratzfestigkeit wird dabei im Rahmen der vorliegenden Offenbarung vorzugsweise wie folgt bestimmt: Getestet wird die Kratzfestigkeit ebenfalls mit dem Gerät Micro-Combi-Test (MCT) der Firma csm. Eine schematische Darstellung des Messprinzips beim Kratzvorgang zeigt Fig. 2. Der Kratztest erfolgt mit einem Indenter 3, welcher im Rahmen der vorliegenden Offenbarung als Knoop-Indenter ausgebildet ist, wobei die Normalkraft (hier bezeichnet als $F_N$) 4 N beträgt. Der Indenter 3 wird mit einer Geschwindigkeit von 24 mm/min über eine Strecke von 1 mm bewegt, und zwar in Richtung des Pfeils 301.Gleichwertig hierzu kann auch der Knoop-Indenter feststehend ausgebildet sein und relativ zu diesem die Probe 4 bewegt werden Neben der Normalkraft $F_N$ wirkt dabei auf die zu testende Oberfläche 41 der Probe 4 noch die parallel zur Oberfläche 41 wirkende Tangentialkraft $F_T$. Die Penetrationstiefe (auch Penetrationshöhe, siehe Fig. 1, dort bezeichnet als h oder $h_p$) wird mittels eines Sensors 31 bestimmt. Das mittels dieses Tests erhaltene Ergebnis ist dabei insbesondere von Material, Größe und Form des Indenters 3 sowie von der Beschaffenheit der getesteten Probe 4 abhängig, beispielsweise vom Material der Probe 4 und/oder dessen Mikrostruktur. Für den Fall, dass die Probe 4 eine Oberflächenschicht 401 aufweist, deren Zusammensetzung und/oder sonstige Beschaffenheit von den Bulkeigenschaften abweicht, beispielsweise in Form einer Beschichtung oder einer Schicht, welche beispielsweise aufgrund eines Ionenaustauschs erhalten wurde, kann das mittels dieses Kratztestes erhaltene Ergebnis auch von der Dicke der Oberflächenschicht 401, deren Zusammensetzung und/oder Mikrostruktur abhängen. Für den Test werden bei einer relativen Luftfeuchtigkeit zwischen 30% und 50% 50 Kratzer 42 nebeneinander auf die Probe 4 aufgebracht bzw. in deren Oberfläche 41 eingebracht, wobei wie ausgeführt der Indenter 3 als Knoop-Indenter ausgebildet ist. Die Auswertung erfolgt als visuelle Beurteilung der Kratzer 42 bzw. Kratzspuren 42 auf Ausmuschelungen 43. Die Anzahl von Kratzern bzw. Kratzspuren 42 mit Ausmuschelungen 43 wird dokumentiert. Eine beispielhafte Darstellung einer guten Probe ohne Ausmuschelungen 43 an der Kratzspur bzw. dem Kratzer 42 ist Figur 3a zu entnehmen. Eine im Sinne dieses Kratztests schlechte Probe mit Ausmuschelungen 43 an der Kratzspur bzw. dem Kratzer 42 zeigen jeweils Fig. 3b und 3c. Im Falle der Darstellung der Figur 3b entsteht die Ausmuschelung erst nach dem Beginn der Relativbewegung des Indenters 3 relativ zu dem Probenkörper 4, welches an einer anfänglichen Kratzspur 42 ohne Ausmuschelungen 43 und erst nach Beginn der Relativbewegung eintretenden Ausmuschelungen 43 zu erkennen ist. Im Falle der Darstellung der Figur 3c entsteht die Ausmuschelung bereits mit dem Beginn der Relativbewegung des Indenters 3 relativ zu dem Probenkörper 4, welches an dem Fehlen einer alleinigen anfänglichen Kratzspur 42 zu erkennen ist, da bereits mit dem Beginn der Relativbewegung des Indenters 3 relativ zu dem Probenkörper 4 an deren lateralen Breite zu erkennende Ausmuschelungen 43 auftreten, in welchen dann die Kratzspur 42 verläuft.

Als Ausmuschelung wird hierbei eine Verbreiterung der Kratzspur oder des Kratzers um einen wenigstens dreifachen Wert der lateralen Breite der anfänglichen Kratzspur in der Oberfläche 41 und in der Erstreckung parallel zur Oberfläche 41 sowie senkrecht zur Kratzspur, somit senkrecht zu der Richtung des Pfeils 301 angesehen Sollte eine Ausmuschelung bereits bei Beginn der Bewegung des Indenters oder des Prüfkörpers 4 entstehen, wird als Ausmuschelung der wenigstens dreifache Wert der lateralen Breite des Indenters 3 in dessen in das Glas eingedrungenen Zustand in der Ebene der Oberfläche 41 des Prüfkörpers 4 verstanden.

Bei einem Knoop-Indenter handelt es sich um eine Diamantspitze mit rhombischer Form. Der Eindringkörper (oder Indenter) ist beispielsweise in der DIN EN ISO 4545 beschrieben.

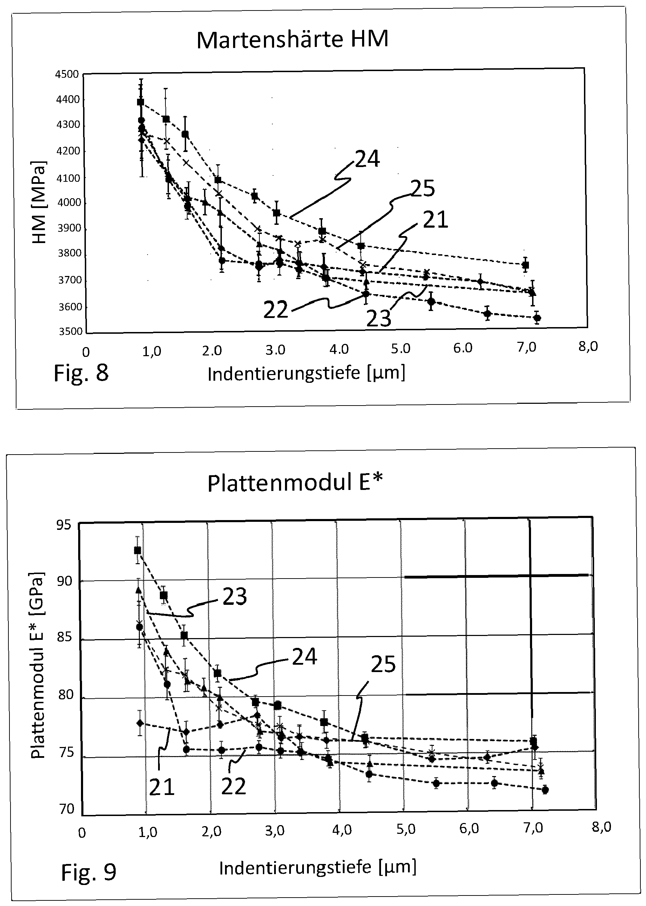

Mit Gläsern bzw. Glasartikeln nach Ausführungsformen kann dabei überraschenderweise ein Ergebnis von 0 erzielt werden (beispielsweise einem Glas bzw. einem Glasartikel, mit welchem die Messwertegesamtheit 25 erhalten wird, siehe Fig. 8 bis 10), d.h. bei keiner der eingebrachten Kratzer bzw. Kratzspuren treten Ausmuschelungen auf. Dies ist umso überraschender, als Vergleichsproben an Glasartikeln, welche ein Glas anderer Zusammensetzung umfassen, bzw. welche ein anderes physikalisches Verhalten bei Indentierung aufweist, zwischen 30 und 50 Kratzer mit Ausmuschelungen aufweisen können (z.B. ein Glas bzw. ein Glasartikel, mit welchem die Messwertegesamtheit 23 bzw. 24 erhalten wird, siehe Fig. 8 bis 10).

Die Erfinder vermuten, dass diese sehr überraschend gute Kratzfestigkeit erzielt werden kann durch eine Kombination geeigneter Vorspannparameter, also sich insbesondere auch als Ergebnis der in einen Glasartikel eingebrachten Vorspannung darstellen kann.

Die vorliegende Offenbarung betrifft daher auch einen scheibenförmigen Glasartikel, vorzugsweise einen scheibenförmigen Glasartikel nach Ausführungsformen der Offenbarung, aufweisend eine vorzugsweise durch zumindest einen Ionenaustausch erhaltene Vorspannung, bei welchem zusammen mit dem Einbringen der Vorspannung auch ein elastischer Anteil $\eta$ der Verformung bis zu einer Tiefe von etwa 3 $\mu$m erhöht wird.

Die Besonderheit des Glasartikels nach der vorliegenden Offenbarung kann also insbesondere darin gesehen werden, dass der Glasartikel besondere elastische Eigenschaften in einem oberflächennahen Bereich aufweist, insbesondere einem oberflächennahen Bereich bis etwa 3 $\mu$m, insbesondere bis etwa 2 $\mu$m und gerade auch bereits bei einer Tiefe von etwa 1 $\mu$m. Denn hier zeigt sich beispielsweise ein besonders hoher elastischer Anteil in einem Verfahren zur Härteprüfung in Anlehnung an oder gemäß DIN EN ISO 14577 von wenigstens 58 %.

Zwar sind Gläser bekannt, bei welchen noch höhere elastische Anteile erzielt werden können, allerdings sind diese anders aufgebaut und können insbesondere nicht so hoch chemisch vorgespannt werden wie bevorzugte Gläser bzw. Glasartikel nach Ausführungsformen. Die Erfinder vermuten, dass die besonders guten Eigenschaften des Glases bzw. Glasartikels nach der vorliegenden Offenbarung auf die spezielle Glasstruktur zurückzuführen sein könnten, bei welcher ein gewisser Anteil von $B_2O_3$ vorliegt.$B_2O_3$ bildet häufig, anders als beispielsweise $SiO_2$, keine oder zumindest weniger dreidimensionalen Verknüpfungen aus, sondern neigt eher zu zweidimensional verknüpften Strukturen, welche der Anschaulichkeit halber auch verglichen werden können mit den zweidimensionalen Strukturen von Graphit. Es wird daher vermutet, dass durch den gewissen, wenn auch geringen, Anteil am Netzwerkbilder $B_2O_3$ im Glas bzw. Glasartikel eine Glasstruktur erhalten werden kann, bei der die Boratglasstrukturen eine Art Gleitwirkung im Glasnetzwerk zumindest unterstützen können, sodass zumindest in einem oberflächennahen Bereich eine erhöhte Elastizität beobachtet werden kann.

Gemäß einer Ausführungsform des Glasartikels umfasst das Glas und/oder umfasst der Glasartikel höchstens 3 Gew.-% $P_2O_5$, bevorzugt höchstens 2 Gew.-% $P_2O_5$ und besonders bevorzugt höchstens 1,7 Gew.-% $P_2O_5$. $P_2O_5$ ist eine optionale Komponente des Glases bzw. des Glasartikels nach der vorliegenden Offenbarung. $P_2O_5$ ist eine Glaskomponente, welche netzwerkbildend ist und die Schmelzbarkeit eines Glases erhöhen kann. Auch kann $P_2O_5$ den Ionenaustausch erleichtern, also zu geringeren Prozesszeiten führen. Vorzugsweise beträgt der Gehalt des Glases bzw. Glasartikels mindestens 0,1 Gew.-%, bevorzugt mindestens 0,25 Gew.-% und besonders bevorzugt mindestens 0,5 Gew.-%. Jedoch kann ein zu hoher Gehalt an $P_2O_5$ in einem Glas oder Glasartikel die chemische Stabilität des Glases oder Glasartikels verringern oder es kann durch $P_2O_5$ zu Entmischungserscheinungen kommen. Auch kann $P_2O_5$ zu Schwierigkeiten bei der Herstellung führen, da das Material des Schmelzaggregats angegriffen werden kann. Daher ist der Phosphatgehalt vorzugsweise begrenzt und beträgt im Glas oder Glasartikel nach der vorliegenden Offenbarung höchstens 3 Gew.-% $P_2O_5$, vorzugsweise höchstens 2 Gew.-%, besonders bevorzugt höchstens 1,7 Gew.-%.

Es hat sich darüber hinaus überraschenderweise gezeigt, dass gerade in der Kombination der Komponenten $B_2O_3$ und $P_2O_5$, insbesondere in den vorstehend genannten Gehalten, eine besonders vorteilhafte Ausbildung eines kratzfesten und gleichzeitig hoch vorgespannten Glasartikels ermöglicht. Hierbei kann $P_2O_5$ die auf die Vorspanneigen-

schaften negativen Auswirkungen von $B_2O_3$ ausgleichen. Wird beispielsweise ein $B_2O_3$-Gehalt gewählt, der dazu führt, dass $B_2O_3$ trigonal im Glas vorliegt, dann führt dies zu einer höheren Kratzbeständigkeit aufgrund von vermutlich vorhandenen Gleitebenen, ähnlich zur Struktur von Graphit. Liegt jedoch im Gesamtsystem ein genügend hoher Anteil an Alkalien und Erdalkalien vor, sodass $B_2O_3$ auch tetragonal vorliegt, so bindet es insbesondere die für den Ionenaustausch entscheidenden Alkalien stärker an sich. Dies hat einen erschwerten Ionenaustausch zur Folge. Hierbei kann ein gewisser Anteil $P_2O_5$ helfen, da $P_2O_5$ im Glas Ketten ausbildet und damit vermutlich für Kanäle im Glas sorgt, die den Ionenaustausch, insgesamt betrachtet, erleichtern können.

Zur Ausbildung einer Vorspannung zumindest im oberflächennahen Bereich des Glasartikels bis 3 $\mu$m, insbesondere bis 2 $\mu$m und gerade auch bis 1 $\mu$m Tiefe ist es weiterhin auch vorteilhaft, wenn das Glas bzw. wenn der Glasartikel einen gewissen Mindestgehalt an $Na_2O$ umfasst. $Na_2O$ ist ein Netzwerkwandler und kann daher insbesondere die Austauschbarkeit und mithin die Vorspannbarkeit und entsprechend auch die erzielbare bzw. erzielte Vorspannung eines Glasartikels beeinflussen. Gemäß einer Ausführungsform umfasst das Glas und/oder umfasst der Glasartikel mindestens 0,8 Gew.-% $Na_2O$, wobei vorzugsweise das Glas und/oder der Glasartikel höchstens 8 Gew.-% $Na_2O$, bevorzugt höchstens 7,5 Gew.-% $Na_2O$ und besonders bevorzugt höchstens 7 Gew.-% $Na_2O$ umfasst. Mit anderen Worten ist gemäß dieser Ausführungsform das Glas und/oder der Glasartikel als $Na_2O$ umfassendes Glas bzw. Glasartikel ausgebildet. Es ist vorteilhaft, wenn das Glas und/oder der Glasartikel $Na_2O$ umfasst, denn in diesem Fall ist ein Ionenaustausch von Natriumionen gegen Kaliumionen möglich. Dies kann hinsichtlich der mechanischen Eigenschaften zu besonders vorteilhaften Ausgestaltungen eines Glasartikels führen.

Insbesondere hat sich gezeigt, dass im Zusammenwirken der Glaskomponenten, insbesondere der Komponente $B_2O_3$ mit $Na_2O$, eine besonders vorteilhafte Ausgestaltung des Glasartikels ermöglicht wird. Denn als Netzwerkwandler beeinflusst $Na_2O$ die Eigenschaften des Glasartikels auch in dessen Grenzfläche. Wie vorstehend ausgeführt, ermöglicht $Na_2O$ auch die Austauschbarkeit gegenüber Kaliumionen. Dies bedeutet, dass der oberflächennahe Bereich des Glasartikels auf diese Weise so ausgestaltet werden kann, dass im oberflächennahen Bereich ein Austausch von Natrium gegen Kalium erfolgt. Gerade in diesem oberflächennahen Bereich werden auch die guten, höchst vorteilhaften elastischen Eigenschaften des Glasartikels erzielt, welche insbesondere auch zu den vorstehend erläuterten, sehr guten Kratzergebnissen mit nur sehr geringen, teilweise sogar keinerlei Ausmuschelungen von Glasartikeln nach Ausführungsformen führen oder führen können.

Die guten mechanischen, insbesondere elastischen, Eigenschaften des Glasartikels nach der vorliegenden Offenbarung können vorteilhaft durch einen gewissen Gehalt an $K_2O$ im Glas und/oder des Glasartikels unterstützt werden. Gemäß einer Ausführungsform umfasst das Glas und/oder der Glasartikel höchstens 1 Gew.-% $K_2O$, bevorzugt bis 0,8 Gew.-% $K_2O$ und besonders bevorzugt bis 0,7 Gew.-% $K_2O$, wobei besonders bevorzugt das Glas und/oder der Glasartikel wenigstens 0,1 Gew.-% $K_2O$ umfasst. Für die Einstellung optimierter mechanischer Eigenschaften, insbesondere einer verbesserten Verschleißfestigkeit, eines Glases bzw. eines Glasartikels, insbesondere einer optimierten sharp-impact-Festigkeit bei gleichzeitig guter Vorspannung und einer verbesserten Kratzfestigkeit, kann es vorteilhaft sein, wenn das Glas eine gewisse Menge an $K_2O$ umfasst. Insbesondere hat sich gezeigt, dass der Ionenaustausch und mithin die Vorspannbarkeit durch $K_2O$ verbessert werden kann. Dies wird auf die durch die Kalium-Ionen aufgelockerte Glasstruktur zurückgeführt. Weiterhin verbessert $K_2O$ die Schmelzbarkeit des Glases. Vorzugsweise umfasst das Glas bzw. der Glasartikel nach der vorliegenden Offenbarung mindestens 0,1 Gew.-% $K_2O$, besonders bevorzugt mindestens 0,2 Gew.-%

$Li_2O$ ist ein notwendiger Bestandteil der Gläser und Glasartikel nach der vorliegenden Offenbarung. Insbesondere ist durch den Gehalt an Lithiumoxid in den Gläsern und/oder Glasartikeln nach der vorliegenden Offenbarung sowohl eine gute Festigkeit vorgespannter Gläser in statischen Festigkeitsuntersuchungen wie der Biegefestigkeit nach der Vierpunkt-Biegung oder in der Festigkeit nach Bestimmung in einem Doppelringtest, als auch gegenüber blunt-impact-Belastungen, wie dem Kugelfalltest, als auch gegenüber sharp-impact-Belastungen, also dem Einwirken auf die Oberfläche eines Glases oder eines Glasartikels mit Partikeln, welche einen Winkel von weniger als 100° aufweisen, möglich (welche beispielsweise auch in einem sogenannten Set-Drop-Test gezeigt werden kann). Die Gläser und/oder Glasartikel nach der vorliegenden Offenbarung zeichnen sich darüber hinaus aber auch durch eine verbesserte Härte aus, die beispielsweise in einem Verfahren zur Härteprüfung zur Bestimmung der sogenannten Martens-Härte sichtbar ist. Lithiumoxid ist dabei vorteilhaft, da es einen Ionenaustausch gegen Natrium ermöglicht und damit zu einer hohen Vorspannbarkeit bzw. Vorspannung des Glases bzw. Glasartikels führt. Die Gläser und/oder Glasartikel nach der vorliegenden Offenbarung umfassen daher $Li_2O$ zu mindestens 3 Gew.-%, bevorzugt zu mindestens 3,5 Gew.-%. Jedoch ist der Gehalt an $Li_2O$ nach der vorliegenden Offenbarung begrenzt. Beispielsweise kann es bei zu hohen Gehalten an $Li_2O$ zu Entmischungen kommen. Die Gläser und Glasartikel umfassen daher $Li_2O$ zu höchstens 5,5 Gew.-%.

Es ist vorteilhaft, einen gewissen Mindestanteil $SiO_2$ im Glas bzw. Glasartikel zu gewährleisten, um die chemische Beständigkeit und auch die mechanischen Eigenschaften des Glases bzw. des Glasartikels zu verbessern. Letzteres wird auf die Unterstützung der Ausbildung eines starren, rigiden Grund-Glasnetzwerkes zurückgeführt, dass bei einem Ionenaustausch wenig relaxiert und somit eine hohe Vorspannung ermöglichen kann. Allerdings sind Gläser mit einem zu hohen Anteil an $SiO_2$ einem Schmelzprozess mit anschließender Heißformgebung aufgrund der extrem hohen Schmelztemperaturen von reinem $SiO_2$ nicht wirtschaftlich zugänglich. Weiterhin kann ein zu hoher Anteil an $SiO_2$ zu einer erhöhten Sprödigkeit des Glases oder des Glasartikels führen, sodass aus diesen Gründen der Anteil an $SiO_2$ begrenzt sein muss.

Es ist daher vorteilhaft, wenn das Glas bzw. wenn der Glasartikel ausreichend $SiO_2$ umfasst, um eine ausreichende Vorspannbarkeit bzw. Vorspannung zu ermöglichen. Gemäß einer Ausführungsform umfasst daher das Glas bzw. der Glasartikel mindestens 57 Gew.-% $SiO_2$ umfasst, bevorzugt mindestens 59 Gew.-% $SiO_2$ und besonders bevorzugt mindestens 61 Gew.-% $SiO_2$. Vorzugsweise ist der Gehalt an $SiO_2$ im Glas bzw. Glasartikel aber begrenzt, um zu vermeiden, dass eine zu große Sprödigkeit des Glases bzw. Glasartikels resultiert. Vorzugsweise umfasst das Glas bzw. der Glasartikel gemäß einer Ausführungsform höchstens 69 Gew.-% $SiO_2$, bevorzugt höchstens 67 Gew.-%.

$Al_2O_3$ ist in Gläsern mit genügend hohem Alkaligehalt ein bekannter Netzwerkbildner, welcher insbesondere alkalihaltigen Silikatgläsern zugesetzt wird. Durch die Zugabe von $Al_2O_3$ wird die Zahl der Trennstellensauerstoffe verringert, sodass trotz eines gewissen Gehaltes ein starres Netzwerk erhalten werden kann, was vorteilhaft für die Ausbildung einer guten Vorspannbarkeit bzw. Vorspannung ist. Zudem erleichtert $Al_2O_3$ den Ionenaustausch. Auf diese Weise kann also die Vorspannbarkeit eines alkalihaltigen Silikatglases verbessert werden, sodass mit einem solchen Glas ein besonders hoch vorgespannter Glasartikel erhalten werden kann. Der Mindestgehalt an $Al_2O_3$ im Glas beträgt daher vorteilhaft gemäß einer Ausführungsform 17 Gew.-%. Allerdings verringert ein zu hoher $Al_2O_3$-Gehalt die chemische Beständigkeit des resultierenden Glases bzw. Glasartikels, insbesondere die Säurebeständigkeit, und erhöht zudem auch die Schmelztemperatur. Auch ist es für die Ausbildung eines Glasartikels, welcher auch in praxisrelevanten Anwendungen eine gute Performance zeigt, beispielsweise eine hohe Oberflächenhärte und/oder eine gute Kratzfestigkeit, vorteilhaft, wenn das Glasnetzwerk nicht zu starr, sondern noch flexibel ist bzw. elastische Anteile aufweist. Vorzugsweise ist daher der Gehalt an $Al_2O_3$ im Glas bzw. Glasartikel nach weiteren Ausführungsformen begrenzt und beträgt bevorzugt höchstens 25 Gew.-%, besonders bevorzugt höchstens 21 Gew.-%.

Bevorzugt liegt die Summe des Gehalts von $Al_2O_3$ und $SiO_2$, bezogen auf die Angabe in Gew.-%, zwischen mindestens 75 und höchstens 92, bevorzugt höchstens 90, und/oder beträgt der gesamte Gehalt an Netzwerkbildnern im Glas und/oder Glasartikel nicht mehr als 92 Gew.-%, besonders bevorzugt nicht mehr als 90 Gew.-%.

Ein Gehalt an den Netzwerkbildnern $Al_2O_3$ und $SiO_2$ von mindestens 75 Gew.-% ist insbesondere vorteilhaft, weil auf diese Weise eine ausreichende Menge an Glasbildnern vorhanden ist. Mit anderen Worten wird auf diese Weise sichergestellt, dass ein glasiges Material erhalten wird und die Gefahr der Entglasung während der Herstellung des Glases bzw. Glasartikels verringert wird. Andererseits sollte der Gehalt an den vorgenannten Netzwerkbildnern nicht zu hoch sein, denn sonst ist das resultierende Glas nicht mehr gut schmelzbar. Daher ist der Gehalt von $Al_2O_3$ und $SiO_2$ vorzugsweise begrenzt und beträgt nicht mehr als 92 Gew.-%, bevorzugt nicht mehr als 90 Gew.-%. Vorzugsweise beträgt der gesamte Gehalt an Netzwerkbildnern im Glas bzw. Glasartikel nicht mehr als 92 Gew.-%, besonders bevorzugt nicht mehr als 90 Gew.-%.

Gemäß einer weiteren Ausführungsform beträgt die Dicke des Glasartikels mindestens 0,4 mm und höchstens 3 mm.

Vorzugsweise beträgt die Dicke des Glasartikels mindestens 0,5 mm.

Die Dicke des Glasartikels ist weiterhin vorzugsweise begrenzt und beträgt gemäß einer Ausführungsform höchstens 2 mm, vorzugsweise höchstens 1 mm.

Ein weiterer Aspekt der vorliegenden Offenbarung betrifft ein Lithium-Aluminium-Boro-Silikatglas, umfassend die folgenden Komponenten in Gew.-%:

| | |
|---|---|
| $SiO_2$ | 57 bis 69, bevorzugt 59 bis 69, besonders bevorzugt 61 bis 69, wobei die Obergrenze jeweils vorzugsweise 67 sein kann, |
| $Al_2O_3$ | 17 bis 25, bevorzugt 17 bis 21, |
| $B_2O_3$ | 0,5 bis 7, bevorzugt 0,5 bis 5, besonders bevorzugt 0,5 bis 4,5, wobei die Untergrenze vorzugsweise jeweils bei 1,0 Gew.-% $B_2O_3$ liegen kann, insbesondere vorzugsweise bei jeweils wenigstens 1,4 Gew.-% $B_2O_3$, |
| $Li_2O$ | 3 bis 5,5, bevorzugt 3,5 bis 5,5, |
| $Na_2O$ | 0,8 bis 8, bevorzugt 0,8 bis 7,5, besonders bevorzugt 0,8 bis 7 |

wobei vorzugsweise die Summe des Gehalts von $Al_2O_3$ und $SiO_2$, bezogen auf die Angabe in Gew.-%, zwischen mindestens 75 und höchstens 92, bevorzugt höchstens 90, liegt.

Ein solches Glas ist vorteilhaft, weil es chemisch so vorspannbar ausgestaltet ist, dass chemisch vorgespannte Glasartikel mit einer besonders hohen Festigkeit im sogenannten Set-Drop-Test auch bei Verwendung von groben Körnungen, beispielsweise von 60er Körnungen, erhalten werden. Gleichzeitig werden dabei die vorstehend beschriebenen vorteilhaften Oberflächenhärten und/oder Kratzfestigkeiten von Glasartikeln erzielt, da das Glas so ausgestaltet ist, dass es einen hohen elastischen Anteil zumindest bei Verformungen bzw. Indentierungen in einer Oberflächenschicht aufweist. Das Glas nach der vorliegenden Offenbarung ist trotz eines hohen Gehalts an Glasbildnern, hier insbesondere bevorzugt eines hohen Gehalts an den Glasbildnern $SiO_2$ und $Al_2O_3$ von mindestens 75 Gew.-%, noch überraschend gut schmelzbar.

Die vorteilhaften Eigenschaften des Glases bzw. des Glasartikels nach Ausführungsformen der vorliegenden Offenbarung können nach Auffassung der Erfinder möglicherweise darauf zurückzuführen sein, dass ein Glas der Zusammensetzung in den oben genannten Grenzen so vorspannbar ausgestaltet ist, dass ein chemisch hoch vorgespannter Glasartikel erhalten werden kann, welcher dennoch höchst überraschend bei Verformungen zumindest in einem gewissen Maße elastisch verformbar ist und daher weniger zu Sprödbruch bzw. zu Ausmuschelungen bei einer Kratzbelastung der Oberfläche neigt als dies bei bekannten Hartstoffmaterialien, wie beispielsweise $Al_2O_3$, der Fall ist.

Gemäß einer Ausführungsform des Lithium-Aluminium-Boro-Silikatglases ist diese gegeben durch folgende Zusammensetzung in Gew.-%:

| | |
|---|---|
| $SiO_2$ | 57 bis 69, bevorzugt 59 bis 69, besonders bevorzugt 61 bis 69, wobei die Obergrenze jeweils vorzugsweise 67 sein kann, |
| $Al_2O_3$ | 17 bis 25, bevorzugt 17 bis 21, |
| $B_2O_3$ | 0,5 bis 7, bevorzugt 0,5 bis 5, besonders bevorzugt 0,5 bis 4,5, wobei die Untergrenze vorzugsweise jeweils bei 1,0 Gew.-% $B_2O_3$ liegen kann, insbesondere vorzugsweise bei jeweils wenigstens 1,4 Gew.-% $B_2O_3$, |
| $Li_2O$ | 3 bis 5,5, bevorzugt 3,5 bis 5,5, |
| $Na_2O$ | 0,8 bis 8, bevorzugt 0,8 bis 7,5, besonders bevorzugt 0,8 bis 7 |
| $K_2O$ | 0 bis 1, bevorzugt 0 bis 0,8, besonders bevorzugt 0 bis 0,7 |
| MgO | 0 bis 2, bevorzugt 0 bis 1,5, besonders bevorzugt 0 bis 1, |
| CaO | 0 bis 4,5, |
| SrO | 0 bis 2, bevorzugt 0 bis 1,5, besonders bevorzugt 0 bis 1, |
| ZnO | 0 bis 3, bevorzugt 0 bis 2, besonders bevorzugt 0 bis 1,5, |
| $P_2O_5$ | 0 bis 3, bevorzugt 0 bis 2, besonders bevorzugt 0 bis 1,7, |
| $ZrO_2$ | 0 bis 3, bevorzugt 0 - 2,7, besonders bevorzugt 0 bis 2, |

wobei weiterhin Verunreinigungen und/oder Läutermittel und/oder färbende Bestandteile in Mengen bis zu 2 Gew.-% enthalten sein können.

$ZrO_2$ bringt den Vorteil mit, dass es sich bei genügend hohem Anteil an Alkalien im $SiO_2$-Netzwerk als Glasbildner einbaut und zu einer Verfestigung des Netzwerkes beiträgt. Dabei verbessert es neben der chemischen Beständigkeit auch die mechanischen Eigenschaften. Weiterhin führt ein gewisser Anteil an $B_2O_3$ zu einer Stabilisierung des $ZrO_2$ im Glas bzw. verhindert die Bildung von $ZrO_2$-Kristallen.

Bei Ausführungsformen kann das Glas des Glasartikels $ZrO_2$ aufweisen und umfasst insbesondere bevorzugt als Untergrenze einen $ZrO_2$-Gehalt von mindestens 0,2 Gew.-%.

Ein nochmals weiterer Aspekt der vorliegenden Offenbarung betrifft ein Verfahren zur Herstellung eines Glasartikels nach den vorliegend offenbarten Ausführungsformen umfassend die Schritte:

- einen Ionenaustausch in einem Tauschbad umfassend zwischen mindestens 20 Gew.-%, und bis zu 100 Gew.-% eines Natriumsalzes, vorzugsweise Natriumnitrat $NaNO_3$, für eine Dauer von mindestens 2 Stunden, bevorzugt mindestens 4 Stunden, und höchstens 24 Stunden bei einer Temperatur zwischen mindestens 380°C und höchstens 440°C, wobei optional ein Kaliumsalz, insbesondere Kaliumnitrat $KNO_3$, dem Tauschbad zugesetzt werden kann, insbesondere in der Form, dass die Summe des Gehalts von Natriumsalz und Kaliumsalz sich zu 100 % addieren,

- sowie optional einen zweiten Ionenaustausch in einem Tauschbad umfassend zwischen 0 Gew.-% und 10 Gew.-% eines Natriumsalzes, vorzugsweise Natriumnitrat $NaNO_3$, bezogen auf die Gesamtmenge des Salzes, für eine Dauer von mindestens einer Stunde und höchstens 6 Stunden bei einer Temperatur des Tauschbades von mindestens 380°C und höchstens 440°C, wobei dem Tauschbad ein Kaliumsalz, insbesondere bevorzugt Kaliumnitrat $KNO_3$ zugesetzt wird, insbesondere in der Form, dass die Summe des Gehalts von Natriumsalz und Kaliumsalz sich zu 100 Gew.- % addieren,

- sowie optional einen oder mehrere weitere Ionenaustauschschritte.

Gemäß einem nochmals weiteren Aspekt betrifft die vorliegende Offenbarung auch die Verwendung eines Glasartikels als Abdeckscheibe, insbesondere als Abdeckscheibe für Geräte der Unterhaltungselektronik, insbesondere für Anzeigeeinrichtungen, Bildschirme von Recheneinrichtungen, Messgeräten, TV-Geräten, insbesondere als Abdeckscheibe für mobile Geräte, insbesondere für zumindest ein Gerät aus der Gruppe, welche umfasst: mobile Endgeräte, mobile Datenverarbeitungsgeräte, insbesondere Mobiltelefone, mobile Rechner, Palmtops, Laptops, Tablet-Computer, Wearables, tragbare Uhren und Zeitmesseinrichtungen, oder als Schutzverglasung, insbesondere als Schutzverglasung für Maschinen, oder als Verglasung in Hochgeschwindigkeitszügen, oder als Sicherheitsverglasung, oder als Automobilverglasung, oder in Tauchuhren, oder in U-Booten, oder als Abdeckscheibe für explosionsgeschützte Geräte, insbesondere für solche, in denen der Einsatz von Glas zwingend vorgeschrieben ist.

Beispiele

Als Vergleichsgläser, welche in deren Zusammensetzung kein $B_2O_3$ aufweisen und auch nicht die nachfolgend noch detaillierter diskutierten Werte des elastischen Anteils $\eta$ aufweisen, wird mit dem Bezugszeichen 23 versehen ein Kalk-Natron-Glas sowie mit dem Bezugszeichen 24 versehen ein Li-Al-Si-Glas, insbesondere ein Lithium-Aluminium-Silikatglas mit einem $Li_2O$-Gehalt von 4,6 Gew.-% bis 5,4 Gew.-% und einem $Na_2O$-Gehalt von 8,1 Gew.-% bis 9,7 Gew.-% und einem $Al_2O_3$-Gehalt von 16 Gew.-% bis 20 Gew.-% angegeben.

Der mit dem Bezugszeichen 21, 22 und 25 versehene Glasartikel umfasst jeweils ein Lithium-Aluminium-Boro-Silikatglas oder besteht aus diesem Glas, enthaltend die folgenden Komponenten in Gew.-%:

| | |
|---|---|
| $SiO_2$ | 57 bis 69, bevorzugt 59 bis 69, besonders bevorzugt 61 bis 69, wobei die Obergrenze jeweils vorzugsweise 67 sein kann, |
| $Al_2O_3$ | 17 bis 25, bevorzugt 17 bis 21, |
| $B_2O_3$ | 0,5 bis 7, bevorzugt 0,5 bis 5, besonders bevorzugt 0,5 bis 4,5, wobei die Untergrenze vorzugsweise jeweils bei 1,0 Gew.-% $B_2O_3$ liegen kann, insbesondere vorzugsweise bei jeweils wenigstens 1,4 Gew.-% $B_2O_3$, |
| $Li_2O$ | 3 bis 5,5, bevorzugt 3,5 bis 5,5, |
| $Na_2O$ | 0,8 bis 8, bevorzugt 0,8 bis 7,5, besonders bevorzugt 0,8 bis 7 |

wobei vorzugsweise die Summe des Gehalts von $Al_2O_3$ und $SiO_2$, bezogen auf die Angabe in Gew.-%, zwischen mindestens 75 und höchstens 92, bevorzugt höchstens 90, liegt.

Der mit dem Bezugszeichen 21 versehene Glasartikel weist einen $B_2O_3$-Gehalt von 3,6 Gew.-% +/- 0,5 Gew.-% auf.

Der mit dem Bezugszeichen 22 versehene Glasartikel weist einen $B_2O_3$-Gehalt von 3,9 Gew.-% +/- 0,5 Gew.-% auf.

Der mit dem Bezugszeichen 25 versehene Glasartikel weist einen $B_2O_3$-Gehalt von 2,8 Gew.-% +/- 0,5 Gew.-% auf.

Besonders vorteilhaft und überraschend ist bei diesen Gläsern 21, 22 und 25 deren nach einem geeigneten Vorspannverfahren, beispielsweise

- einem Ionenaustausch in einem Tauschbad umfassend zwischen mindestens 20 Gew.-%, und bis zu 100 Gew.-% eines Natriumsalzes, vorzugsweise Natriumnitrat $NaNO_3$, für eine Dauer von mindestens 2 Stunden, bevorzugt mindestens 4 Stunden, und höchstens 24 Stunden bei einer Temperatur zwischen mindestens 380°C und höchstens 440°C, wobei optional ein Kaliumsalz, insbesondere Kaliumnitrat $KNO_3$, dem Tauschbad zugesetzt werden kann, insbesondere in der Form, dass die Summe des Gehalts von Natriumsalz und Kaliumsalz sich zu 100 Gew.-% addieren,

- sowie optional einem zweiten Ionenaustausch in einem Tauschbad umfassend zwischen 0 Gew.-% und 10 Gew.-% eines Natriumsalzes, vorzugsweise Natriumnitrat $NaNO_3$, bezogen auf die Gesamtmenge des Salzes, für eine Dauer von mindestens einer Stunde und höchstens 6 Stunden bei einer Temperatur des Tauschbades von mindestens 380°C und höchstens 440°C, wobei dem Tauschbad ein Kaliumsalz, insbesondere bevorzugt Kaliumnitrat $KNO_3$ zugesetzt wird, insbesondere in der Form, dass die Summe des Gehalts von Natriumsalz und Kaliumsalz sich zu 100 Gew.-% addieren,

- sowie optional einem oder mehreren weiteren Ionenaustauschschritten

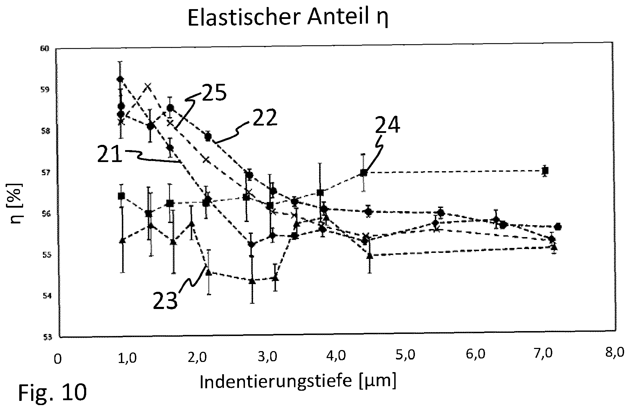

bis zu einer Tiefe von etwa 4 $\mu$m erhaltener, erhöhter elastischer Anteil $\eta$ der Verformung bei einer Härteprüfung in Abhängigkeit von der Indentierungstiefe, wie dieses nachfolgend noch detaillierter unter Bezugnahme auf Figur 10 beschrieben wird.

Beschreibung der Zeichnungen

Die Erfindung wird im Folgenden anhand von Figuren weiter erläutert. Es zeigen:

Fig. 1      eine Prinzipskizze des Indentierens,
Fig. 2      eine schematische Darstellung des Messprinzips beim Kratzvorgang,
Fig. 3a     eine beispielhafte Darstellung eines "guten" Ergebnisses des Kratztests,
Fig. 3b     eine beispielhafte Darstellung eines "schlechten" Ergebnisses des Kratztests, bei welchem die Ausmuschelung erst nach dem Beginn der Relativbewegung des Indenters relativ zu dem Probenkörper zu erkennen ist,
Fig. 3c     eine beispielhafte Darstellung eines "schlechten" Ergebnisses des Kratztests, bei welchem die Ausmuschelung bereits mit dem Beginn der Relativbewegung des Indenters relativ zu dem Probenkörper zu erkennen ist,
Fig. 4      eine Gesamtansicht des Set-Drop-Versuchsaufbaus mit Beschriftung der einzelnen Komponenten,
Fig. 5      die Probenaufnahme und den Auslösemechanismus des Set-Drop-Versuchsaufbaus,
Fig. 6      das Aluminiumgehäuse und die Kunststoffplatte als Probenaufnahme und Probendummy,
Fig. 7      die Ausrichtung des Probendummys mittels 2D-Wasserwaage,
Fig. 8      die Darstellung von Messergebnissen der Härteprüfung für unterschiedliche Gläser bzw. Glasartikel,
Fig. 9      den Plattenmodul E* in Abhängigkeit von der Tiefe der Indentierung für unterschiedliche Gläser bzw. Glasartikel,
Fig. 10     den elastischen Anteil der Verformung bei einer Härteprüfung in Abhängigkeit von der Indentierungstiefe für unterschiedliche Gläser bzw. Glasartikel,
Fig. 11     eine schematische und nicht maßstabsgetreue Darstellung eines Glasartikels nach einer Ausführung, sowie
Fig. 12     eine schematische und nicht maßstabsgetreue Schnittdarstellung durch einen Glasartikel nach einer Ausführungsform.

Fig. 8 zeigt die Martenshärte (HM) in MPa bestimmt an fünf unterschiedlichen chemisch vorgespannten Glasartikeln, wobei die fünf unterschiedlichen Glasartikel jeweils eine unterschiedliche Glaszusammensetzung aufweisen. Diesen fünf unterschiedlichen Glasartikeln können jeweils unterschiedliche Datenpunkte zugeordnet werden, wobei die Datenpunkte für den ersten Glasartikel in Fig. 8 sowie auch in den nachfolgenden Figuren 9 und 10 jeweils mit einer Raute bezeichnet sind, für den zweiten Glasartikel jeweils mit einem Kreis, für den dritten Glasartikel mit einem Dreieck, den vierten Glasartikel jeweils mit einem Quadrat und für den fünften Glasartikel jeweils mit einem Kreuz. In den Figuren 8 bis 10 sind diese unterschiedlichen Messwerte bzw. ggf. entsprechende für diese Datenpunkte erhaltene Verbindungs-oder Datenlinien zwischen diesen Messwerten mit 21 für den ersten Glasartikel (Raute), 22 für den zweiten Glasartikel (Kreis), 23 für den dritten Glasartikel (Dreieck), 24 für den vierten Glasartikel (Quadrat) und 25 für den fünften Glasartikel (Kreuz) bezeichnet. Die Messwerte (bzw. Gesamtheiten von Messwerten) 21, 22 und 25 wurden dabei für Gläser bzw. Glasartikel nach der vorliegenden Offenbarung erhalten. Die Messwerte bzw. Gesamtheiten von Messwerten bzw. Datenlinien 23 und 24 werden für Vergleichsbeispiele erhalten. Dabei entspricht das dritte Vergleichsbeispiel einem üblichen Kalk-Natron-Glas.

Für die in Fig. 8 dargestellten Messwerte der Martenshärte ergibt sich im Vergleich der für die unterschiedlichen Gläser bzw. Glasartikel erhaltenen Messwerte, dass die Martenshärte für den ersten, zweiten und fünften Glasartikel (entsprechend Messwerten bzw. Kurven 21, 22 und 25) um bis zu 25% nach deren geeigneter Vorspannung, wie diese bereits vorstehend erwähnt wurde, höher sein kann, und zwar insbesondere für Indentierungstiefen von beispielsweise bis zu etwa 4 $\mu$m. Eine besonders hohe Martenshärte kann insbesondere im Zusammenspiel einer geeigneten Glaszusammensetzung und einem geeigneten Vorspannverfahren erzielt werden.

Der Anstieg in den Härtewerten ist mit einem Anstieg des E-Moduls bzw. Plattenmoduls E* korreliert. Dies zeigt beispielhaft die Darstellung in Fig. 9. Angegeben sind hierbei die Messwerte, welche für die jeweiligen Gläser bzw. Glasartikel erhalten werden, sowie eine entsprechende Verbindungslinie durch diese Messpunkte.

Allgemein ist die Härte in einem Glassystem mit dem E-Modul korreliert. Ein höherer E-Modul führt zu höheren lokalen Spannungen an Riss-Spitzen bei gegebener Belastung. Beim Kratzen mit einem harten Material führt der höhere E-Modul also zu einer vergrößerten Belastung des Materials. Durch den Ionenaustausch entsteht ein kontinuierlicher Abfall von Härte und E-Modul von der Oberfläche zur Mitte hin. Durch diesen kontinuierlichen Abfall werden Grenzflächen, an denen Spannungskonzentrationen entstehen können, vermieden. Auf der anderen Seite kann das Material vor der Härtung durch Ionenaustausch mechanisch durch Schleifen und Polieren effizient bearbeitet werden.

Die erfindungsgemäßen Gläser bzw. Glasartikel, für die die Messwerte bzw. Daten- oder Verbindungslinien 21, 22 und 25 erhalten werden, führen überraschenderweise bei ähnlichem Härteanstieg wie die Vergleichsbeispiele, die für Messwerte bzw. Verbindungslinien 23 und 24 erhalten werden, zu einem geringeren Anstieg des gemessenen Plattenmoduls. Der Effekt ist für das Glas bzw. den Glasartikel, welches den Messwerten 21 zugeordnet ist, am stärksten ausgeprägt. Dies hängt mit der besonderen Struktur des LABS-Glases zusammen, auf welches der Vorspannprozess vorliegend optimiert wurde.

Die erfindungsgemäßen Gläser bzw. Glasartikel (siehe Messwerte 21, 22 und 25) weisen darüber hinaus überraschenderweise einen signifikant höheren elastischen Anteil $\eta$

als das Kalk-Natron-Glas (Messwerte 23) und das vierte Glas der LAS-Glasfamilie bzw. der vierte Glasartikel (Messwerte 24) auf, wie Fig. 10 zu entnehmen ist. Die Glasfamilie der LABS-Gläser weist ähnliche Werte 21, 22, 25 untereinander auf, die klar differenziert zu den Messwerten 23 und 24, der Vergleichsbeispiele, erhalten werden.

Der elastische Anteil korreliert außerdem mit der Härte. Die Kombination von Härte, einem relativ geringem E-Modul bzw. hier Plattenmodul (E*-Modul) und relativ hohem elastischen Anteil $\eta$ führt zu einer deutlichen Verbesserung des Kratzverhaltens in den oberflächennahen Bereichen des chemisch vorgespannten Glasartikels.

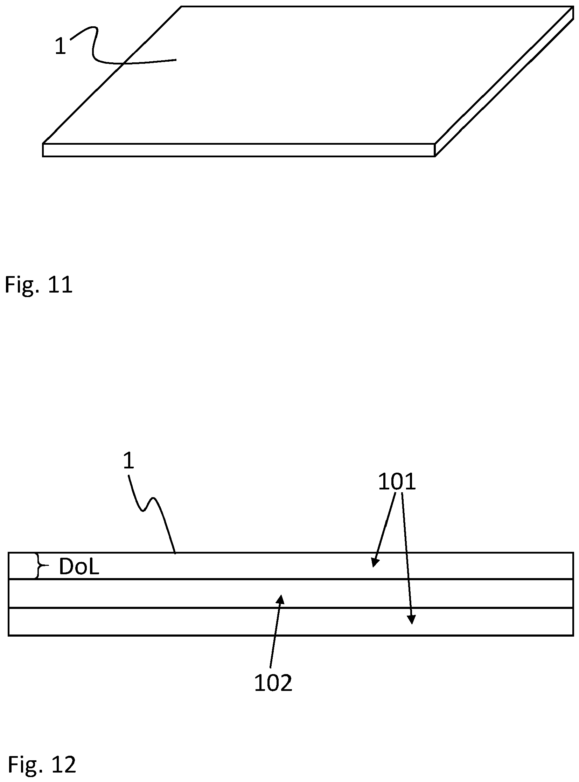

Fig. 11 ist die schematische und nicht maßstabsgetreue Darstellung eines scheibenförmigen Glasartikels nach vorliegend offenbarten Ausführungsformen.

Fig. 12 zeigt eine schematische und nicht maßstabsgetreue Schnittdarstellung eines Glasartikels 1 nach vorliegend offenbarten Ausführungsformen. Der Glasartikel 1 weist dabei zwei an den beiden Hauptflächen des Glasartikels angeordnete Zonen 101 auf, welche unter Druckspannung stehen und auch als Druckspannungszonen bezeichnet werden. Diese Druckspannungszonen 101 haben die ebenfalls in Fig. 2 als 41 bezeichnete schematisch eingezeichnete Abmessung "DoL". Es ist möglich, dass die DoL sich auf den beiden Seiten des scheibenförmigen Glasartikels hinsichtlich ihrer Größe unterscheidet, wobei diese Unterschiede jedoch in der Regel im Rahmen der Messgenauigkeit liegen, sodass die DoL für einen scheibenförmigen Glasartikel 1 in der Regel auf beiden Seiten - zumindest im Rahmen der Messgenauigkeit - gleich ist.

Zwischen den Druckspannungszonen 101 liegt der Bereich 102, welcher unter Zugspannung steht.

Bezugszeichenliste

| 1 | Glasartikel |
|---|---|
| 101 | |
| 102 | |
| 21, 22, 23, 24, 25 | Gesamtheiten von Messwerten bzw. mittels dieser erhaltene Datenlinien |
| 3 | Indenter |
| 31 | Sensor |
| 301 | Bewegungsrichtung von 3 |
| 4 | Probe, Prüfkörper |
| 41 | Zu testende Oberfläche von Prüfkörper bzw. Probe 4 |
| 42 | Kratzer, Kratzspur |
| 43 | Ausmuschelung |
| 401 | Oberflächenschicht von Probe bzw. Prüfkörper 4 |
| F, $F_N$ | Kraft, Normalkraft |
| $F_T$ | Tangentialkraft |
| h, $h_P$ | Penetrationstiefe/-höhe |
| DoL | Depth of Layer, Druckspannungstiefe |

**Patentansprüche**

1. Chemisch vorgespannter oder chemisch vorspannbarer, scheibenförmiger Glasartikel (1) umfassend ein Glas mit einer Zusammensetzung umfassend $Al_2O_3$, $SiO_2$, $Li_2O$ und $B_2O_3$, wobei das Glas und/oder der Glasartikel (1) höchstens 7 Gew.-% $B_2O_3$, bevorzugt höchstens 5 Gew.-% $B_2O_3$, besonders bevorzugt höchstens 4,5 Gew.-% $B_2O_3$ umfasst.

2. Scheibenförmiger Glasartikel (1) nach Anspruch 1, wobei das Glas und/oder der Glasartikel (1) wenigstens 0,5 Gew.-% $B_2O_3$ umfasst, bevorzugt wenigstens 1,0 Gew.-% $B_2O_3$, besonders bevorzugt wenigstens 1,4 Gew.-% $B_2O_3$.

3. Scheibenförmiger Glasartikel (1), insbesondere nach einem der Ansprüche 1 oder 2, aufweisend wenigstens eines der folgenden Merkmale:

   - Der Glasartikel (1) weist in einem Verfahren zur Härteprüfung in Anlehnung an oder gemäß DIN EN ISO 14577 bei Indentierung mit einem Vickers-Indenter einen E*-Modul von höchstens 87 GPa bei einer Indentierungstiefe von 1 $\mu$m und/oder einen E*-Modul von höchstens 80 GPa bei einer Indentierungstiefe von 2 $\mu$m und/oder

einen E*-Modul von höchstens 78 GPa bei einer Indentierungstiefe von 3 $\mu$m auf, wobei die Untergrenze für den E*-Modul bevorzugt jeweils bei mindestens 72 GPa liegt,
- Der Glasartikel (1) weist vorzugsweise in einem Verfahren zur Härteprüfung in Anlehnung an oder gemäß DIN EN ISO 14577 bei Indentierung mit einem Vickers-Indenter einen elastischen Anteil der Verformung von wenigstens 58 % bei einer Indentierungstiefe von 1 $\mu$m auf.

4. Scheibenförmiger Glasartikel (1), insbesondere nach einem der Ansprüche 1 bis 3, aufweisend eine vorzugsweise durch zumindest einen Ionenaustausch erhaltene Vorspannung, bei welchem zusammen mit dem Einbringen der Vorspannung auch ein elastischer Anteil $\eta$ der Verformung bis zu einer Tiefe von etwa 3 $\mu$m erhöht wird.

5. Scheibenförmiger Glasartikel (1) nach einem der Ansprüche 1 bis 4, wobei das Glas und/oder der Glasartikel höchstens 3 Gew.-% $P_2O_5$, bevorzugt höchstens 2 Gew.-% $P_2O_5$ und besonders bevorzugt höchstens 1,7 Gew.-% $P_2O_5$ umfasst.

6. Scheibenförmiger Glasartikel (1) nach einem der Ansprüche 1 bis 5, wobei das Glas und/oder der Glasartikel (1) mindestens 0,8 Gew.-% $Na_2O$ umfasst, wobei vorzugsweise das Glas und/oder der Glasartikel (1) höchstens 8 Gew.-% $Na_2O$, bevorzugt höchstens 7,5 Gew.-% $Na_2O$ und besonders bevorzugt höchstens 7 Gew.-% $Na_2O$, umfasst.

7. Scheibenförmiger Glasartikel (1) nach einem der Ansprüche 1 bis 6, wobei das Glas und/oder der Glasartikel (1) höchstens 1 Gew.-% $K_2O$, bevorzugt bis 0,8 Gew.-% $K_2O$ und besonders bevorzugt bis 0,7 Gew.-% $K_2O$ umfasst und vorzugsweise mindestens 0,1 Gew.-% $K_2O$, besonders bevorzugt mindestens 0,2 Gew.-% $K_2O$ umfasst.

8. Scheibenförmiger Glasartikel (1) nach einem der Ansprüche 1 bis 7, wobei das Glas und/oder der Glasartikel (1) mindestens 3 Gew.-% $Li_2O$ umfasst, bevorzugt mindestens 3,5 Gew.-% $Li_2O$, und/oder wobei das Glas und/oder der Glasartikel (1) höchstens 5,5 Gew.-% $Li_2O$ umfasst.

9. Scheibenförmiger Glasartikel (1) nach einem der Ansprüche 1 bis 8, wobei das Glas und/oder der Glasartikel (1) höchstens 69 Gew.-% $SiO_2$ umfasst, bevorzugt höchstens 67 Gew.-% und/oder wobei das Glas und/oder der Glasartikel (1) mindestens 57 Gew.-% $SiO_2$ umfasst, bevorzugt mindestens 59 Gew.-% $SiO_2$ und besonders bevorzugt mindestens 61 Gew.-% $SiO_2$.

10. Glasartikel (1) nach einem der Ansprüche 1 bis 9, wobei das Glas und/oder der Glasartikel (1) höchstens 25 Gew.-% $Al_2O_3$ umfasst, bevorzugt höchstens 21 Gew.-% $Al_2O_3$ und/oder wobei das Glas und/oder der Glasartikel (1) mindestens 17 Gew.-% $Al_2O_3$ umfasst.

11. Glasartikel (1) nach einem der Ansprüche 1 bis 10, wobei die Summe des Gehalts an $Al_2O_3$ und $SiO_2$ im Glas und/oder Glasartikel (1) zwischen mindestens 75 Gew.-% und höchstens 92 Gew.-%, bevorzugt höchstens 90 Gew.-%, liegt, und/oder wobei der gesamte Gehalt an Netzwerkbildnern im Glas und/oder Glasartikel nicht mehr als 92 Gew.-%, besonders bevorzugt nicht mehr als 90 Gew.-%, beträgt.

12. Glasartikel (1) nach einem der Ansprüche 1 bis 11, wobei die Dicke des Glasartikels (1) mindestens 0,4 mm, bevorzugt mindestens 0,5 mm beträgt.

13. Glasartikel (1) nach einem der Ansprüche 1 bis 12, wobei die Dicke des Glasartikels (1) höchstens 3 mm, bevorzugt höchstens 2 mm und besonders bevorzugt höchstens 1 mm beträgt.

14. Lithium-Aluminium-Boro-Silikatglas, umfassend die folgenden Komponenten in Gew.-%:

$SiO_2$   57 bis 69, bevorzugt 59 bis 69, besonders bevorzugt 61 bis 69, wobei die Obergrenze jeweils vorzugsweise 67 sein kann,

$B_2O_3$   0,5 bis 7, bevorzugt 0,5 bis 5, besonders bevorzugt 0,5 bis 4,5, wobei die Untergrenze vorzugsweise jeweils bei 1,0 Gew.-% $B_2O_3$ liegen kann, insbesondere vorzugsweise bei jeweils wenigstens 1,4 Gew.-% $B_2O_3$,

$Al_2O_3$   17 bis 25, bevorzugt 17 bis 21,

$Li_2O$   3 bis 5,5, bevorzugt 3,5 bis 5,5,

$Na_2O$   0,8 bis 8, bevorzugt 0,8 bis 7,5, besonders bevorzugt 0,8 bis 7,

wobei bevorzugt die Summe des Gehalts von $Al_2O_3$ und $SiO_2$, bezogen auf die Angabe in Gew.-%, zwischen mindestens 75 und höchstens 92, bevorzugt höchstens 90, liegt.

**15.** Verfahren zur Herstellung eines Glasartikels (1), insbesondere nach einem der Ansprüche 1 bis 13, umfassend die Schritte

- einen Ionenaustausch in einem Tauschbad umfassend zwischen mindestens 20 Gew.-%, und bis zu 100 Gew.-% eines Natriumsalzes, vorzugsweise Natriumnitrat $NaNO_3$, für eine Dauer von mindestens 2 Stunden, bevorzugt mindestens 4 Stunden, und höchstens 24 Stunden bei einer Temperatur zwischen mindestens 380°C und höchstens 440°C, wobei optional ein Kaliumsalz, insbesondere Kaliumnitrat $KNO_3$, dem Tauschbad zugesetzt werden kann, insbesondere in der Form, dass die Summe des Gehalts von Natriumsalz und Kaliumsalz sich zu 100 Gew.-% addieren,
- sowie optional einen zweiten Ionenaustausch in einem Tauschbad umfassend zwischen 0 Gew.-% und 10 Gew.-% eines Natriumsalzes, vorzugsweise Natriumnitrat $NaNO_3$, bezogen auf die Gesamtmenge des Salzes, für eine Dauer von mindestens einer Stunde und höchstens 6 Stunden bei einer Temperatur des Tauschbades von mindestens 380°C und höchstens 440°C, wobei dem Tauschbad ein Kaliumsalz, insbesondere bevorzugt Kaliumnitrat $KNO_3$ zugesetzt wird, insbesondere in der Form, dass die Summe des Gehalts von Natriumsalz und Kaliumsalz sich zu 100 Gew.-% addieren,
- sowie optional einen oder mehrere weitere Ionenaustauschschritte.

**16.** Glasartikel (1), hergestellt oder herstellbar in einem Verfahren nach Anspruch 15 und/oder umfassend ein Glas nach Anspruch 14.

**17.** Verwendung eines Glasartikels (1) nach einem der Ansprüche 1 bis 13 sowie 16 als Abdeckscheibe, insbesondere als Abdeckscheibe für Geräte der Unterhaltungselektronik, insbesondere für Anzeigeeinrichtungen, Bildschirme von Recheneinrichtungen, Messgeräten, TV-Geräten

insbesondere als Abdeckscheibe für mobile Geräte, insbesondere für zumindest ein Gerät aus der Gruppe, welche umfasst: mobile Endgeräte, mobile Datenverarbeitungsgeräte, insbesondere Mobiltelefone, mobile Rechner, Palmtops, Laptops, Tablet-Computer, Wearables, tragbare Uhren und Zeitmesseinrichtungen; oder
als Schutzverglasung, insbesondere als Schutzverglasung für Maschinen, oder
als Verglasung in Hochgeschwindigkeitszügen, oder
als Sicherheitsverglasung, oder
als Automobilverglasung, oder in Tauchuhren, oder
in U-Booten, oder
als Abdeckscheibe für explosionsgeschützte Geräte,
insbesondere für solche, in denen der Einsatz von Glas zwingend vorgeschrieben ist.

Fig. 1

Fig. 2

Fig. 3a

Fig. 3b

Fig. 3c

Fig. 4:

Fig. 5: Probenaufnahme und Auslösemechanismus des Set-Drop Versuchsaufbaus

*Fig. 6:* *Aluminiumgehäuse und Kunststoffplatte als Probenaufnahme und Probendummy*

Fig. 7: *Ausrichtung des Probendummys in der Probenaufnahme mittels 2D-Wasserwaage*

Fig. 8 — Martenshärte HM

Fig. 9 — Plattenmodul E*

Elastischer Anteil η

Fig. 10

1

Fig. 11

1

101

DoL

102

Fig. 12

Europäisches
Patentamt

European
Patent Office

Office européen
des brevets

**EUROPÄISCHER RECHERCHENBERICHT**

Nummer der Anmeldung

EP 22 20 7760

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2010 009584 A1 (SCHOTT AG [DE]) 1. September 2011 (2011-09-01) * Ansprüche 1,5,12; Beispiel 27; Tabellen 2,3 * | 1-17 | INV. C03C21/00 C03C3/091 |
| | ----- | | |
| X | US 2005/090377 A1 (SHELESTAK LARRY J [US] ET AL) 28. April 2005 (2005-04-28) * Absätze [0084], [0088]; Ansprüche 1,48; Tabellen 1,3 * | 1-17 | |
| | ----- | | |
| X,D | EP 1 593 658 A1 (SCHOTT AG [DE]) 9. November 2005 (2005-11-09) * Absatz [0072]; Anspruch 28; Tabellen 1,2 * | 1-6,8-17 | |
| | ----- | | |
| X | US 2018/127302 A1 (GROSS TIMOTHY MICHAEL [US] ET AL) 10. Mai 2018 (2018-05-10) * Absätze [0002], [0003]; Tabellen 2,3 * | 1-6,8-17 | |
| | ----- | | |
| X | US 2019/127265 A1 (DEJNEKA MATTHEW JOHN [US] ET AL) 2. Mai 2019 (2019-05-02) * Absätze [0089], [0090]; Anspruch 47; Beispiel 77; Tabelle 2 * | 1-4,6, 8-17 | RECHERCHIERTE SACHGEBIETE (IPC) C03C |
| | ----- | | |

Der vorliegende Recherchenbericht wurde für alle Patentansprüche erstellt

| Recherchenort | Abschlußdatum der Recherche | Prüfer |
|---|---|---|
| München | 28. Februar 2023 | King, Ruth |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

## ANHANG ZUM EUROPÄISCHEN RECHERCHENBERICHT
## ÜBER DIE EUROPÄISCHE PATENTANMELDUNG NR.

`EP 22 20 7760`

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

`28-02-2023`

| Im Recherchenbericht angeführtes Patentdokument | Datum der Veröffentlichung | Mitglied(er) der Patentfamilie | | Datum der Veröffentlichung |
|---|---|---|---|---|
| DE 102010009584 A1 | 01-09-2011 | CN | 102906042 A | 30-01-2013 |
| | | DE | 102010009584 A1 | 01-09-2011 |
| | | JP | 5744068 B2 | 01-07-2015 |
| | | JP | 2013520388 A | 06-06-2013 |
| | | KR | 20140027861 A | 07-03-2014 |
| | | US | 2012321898 A1 | 20-12-2012 |
| | | US | 2016347655 A1 | 01-12-2016 |
| | | US | 2019276355 A1 | 12-09-2019 |
| | | WO | 2011104035 A2 | 01-09-2011 |
| US 2005090377 A1 | 28-04-2005 | CN | 1886348 A | 27-12-2006 |
| | | EP | 1682458 A1 | 26-07-2006 |
| | | EP | 2319812 A1 | 11-05-2011 |
| | | HK | 1101509 A1 | 18-10-2007 |
| | | JP | 4742046 B2 | 10-08-2011 |
| | | JP | 2007527354 A | 27-09-2007 |
| | | JP | 2010001216 A | 07-01-2010 |
| | | US | 2005090377 A1 | 28-04-2005 |
| | | US | 2009263662 A1 | 22-10-2009 |
| | | US | 2010233407 A1 | 16-09-2010 |
| | | US | 2011079048 A1 | 07-04-2011 |
| | | WO | 2005042423 A1 | 12-05-2005 |
| EP 1593658 A1 | 09-11-2005 | AT | 380164 T | 15-12-2007 |
| | | CN | 1693247 A | 09-11-2005 |
| | | DE | 102004022629 A1 | 15-12-2005 |
| | | EP | 1593658 A1 | 09-11-2005 |
| | | JP | 2005320234 A | 17-11-2005 |
| | | US | 2005250639 A1 | 10-11-2005 |
| US 2018127302 A1 | 10-05-2018 | CN | 110167894 A | 23-08-2019 |
| | | CN | 110167895 A | 23-08-2019 |
| | | EP | 3535219 A2 | 11-09-2019 |
| | | EP | 3535220 A2 | 11-09-2019 |
| | | JP | 7201589 B2 | 10-01-2023 |
| | | JP | 2019532906 A | 14-11-2019 |
| | | JP | 2019534234 A | 28-11-2019 |
| | | KR | 20190078612 A | 04-07-2019 |
| | | KR | 20190078626 A | 04-07-2019 |
| | | TW | 201823175 A | 01-07-2018 |
| | | TW | 201825427 A | 16-07-2018 |
| | | US | 2018127302 A1 | 10-05-2018 |
| | | US | 2021238080 A1 | 05-08-2021 |
| | | WO | 2018085274 A2 | 11-05-2018 |
| | | WO | 2018085278 A2 | 11-05-2018 |

EPO FORM P0461

Für nähere Einzelheiten zu diesem Anhang : siehe Amtsblatt des Europäischen Patentamts, Nr.12/82

`Seite 1 von 2`

**ANHANG ZUM EUROPÄISCHEN RECHERCHENBERICHT
ÜBER DIE EUROPÄISCHE PATENTANMELDUNG NR.**                    EP 22 20 7760

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-02-2023

| Im Recherchenbericht angeführtes Patentdokument | Datum der Veröffentlichung | Mitglied(er) der Patentfamilie | | Datum der Veröffentlichung |
|---|---|---|---|---|
| US 2019127265 A1 | 02-05-2019 | CN | 111315697 A | 19-06-2020 |
| | | EP | 3704069 A1 | 09-09-2020 |
| | | JP | 2021501108 A | 14-01-2021 |
| | | KR | 20200079283 A | 02-07-2020 |
| | | TW | 201922653 A | 16-06-2019 |
| | | US | 2019127265 A1 | 02-05-2019 |
| | | US | 2022017405 A1 | 20-01-2022 |
| | | WO | 2019089602 A1 | 09-05-2019 |

Für nähere Einzelheiten zu diesem Anhang : siehe Amtsblatt des Europäischen Patentamts, Nr.12/82

EPO FORM P0461

**Seite 2 von 2**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20190016632 A1
- US 959342 B2
- US 20180057401 A1
- US 10294151 B2
- US 20180029932 A1
- US 10259746 B2
- US 20170166478 A1
- US 9908811 B2
- US 20160122240 A1
- US 10239784 B2
- US 20160122239 A1
- US 10150698 B2
- US 20170295657 A1
- US 10271442 B2
- US 20100028607 A1
- US 8312739 B2
- US 20130224492 A1
- US 9359251 B2
- US 20160023944 A1
- US 9718727 B2
- US 20120052271 A1
- US 10227253 B2
- US 20150030840 A1
- US 20140345325 A1
- US 20160257605 A1
- US 9487434 B2
- US 20150239776 A1
- US 9517968 B2
- US 20150259244 A1
- US 9567254 B2
- US 20170036952 A1
- US 9676663 B2
- US 20180002223 A1
- US 10266447 B2
- US 20170129803 A1
- US 20160102014 A1
- US 20150368153 A1
- US 20150368148 A1
- US 9902648 B2
- US 20150239775 A1
- US 10118858 B2
- US 20160264452 A1
- US 2016102011 A1
- US 9593042 B2
- WO 2012126394 A1
- US 20140308526 A1
- US 9540278 B2

- US 20110294648 A1
- US 8759238 B2
- US 20100035038 A1
- US 8075999 B2
- US 4055703 A
- DE 102010009584 A1
- DE 102010009584 B4
- US 20160347655 A1
- US 10351471 B2
- CN 102690059 A
- CN 102690059 B
- US 20160356760 A1
- US 10180416 B2
- WO 2017049028 A1
- US 9897574 B2
- WO 2017087742 A1
- US 20170291849 A1
- US 10017417 B2
- US 20170022093 A1
- US 9701569 B2
- US 2017300088 A1
- US 9977470 B2
- EP 1593658 A1
- EP 1593658 B1
- US 20050250639 A1
- US 20180022638 A1
- US 10183887 B2
- US 20190152838 A1
- US 20130122284 A1
- US 9156724 B2
- US 20150079400 A1
- US 9714188 B2
- US 20150099124 A1
- US 9701574 B2
- WO 2019085422 A1
- US 20170197869 A1
- US 10131567 B2
- US 20150140325 A1
- US 10125044 B2
- US 20150118497 A1
- US 9822032 B2
- US 20120135852 A1
- US 8796165 B2
- US 20150147575 A1
- US 10000410 B2
- US 20150376050 A1
- US 9783451 B2